# EUROPEAN PATENT SPECIFICATION

(11) **EP 3 918 460 B1**
(45) Date of publication and mention of the grant of the patent: **23.09.2026**
(21) Application number: 20759044.9
(22) Date of filing: 19.02.2020
(51) Int. Cl.: G06F 8/38, G06F 9/451, G06F 9/445

(54) **ELECTRONIC DEVICE FOR DISPLAYING EXECUTION SCREEN OF APPLICATION AND METHOD OF CONTROLLING THE SAME**
ELEKTRONISCHE VORRICHTUNG ZUR ANZEIGE DES AUSFÜHRUNGSBILDSCHIRMS EINER ANWENDUNG UND VERFAHREN ZUR STEUERUNG DERSELBEN
DISPOSITIF ÉLECTRONIQUE DESTINÉ À AFFICHER UN ÉCRAN D'EXÉCUTION D'APPLICATION ET PROCÉDÉ DE COMMANDE ASSOCIÉ

(30) Priority: 19.02.2019 KR 20190019240
(43) Date of publication of application: 08.12.2021
(73) Proprietor: Samsung Electronics Co., Ltd., Suwon-si, Gyeonggi-do 16677 (KR)
(72) Inventor: KIM, Seokwon, Suwon-si Gyeonggi-do 16677 (KR); KIM, Jinseok, Suwon-si Gyeonggi-do 16677 (KR); JEON, Dami, Suwon-si Gyeonggi-do 16677 (KR)
(74) Representative: Nederlandsch Octrooibureau
(86) International application number: PCT/KR2020/002384
(87) International publication number: WO 2020/171584

(56) References cited:
- JP-A- 2013 126 140
- KR-A- 20110 129 090
- KR-A- 20160 101 633
- KR-A- 20160 101 633
- US-A1- 2013 154 937
- US-A1- 2015 067 573
- ANTONIA: "Is Your Phone's Screen At Risk Of Burn-In?", 21 May 2018 (2018-05-21), XP055890626, Retrieved from the Internet <URL:https://www.compareandrecycle.co.uk/blog/is-your-phones-screen-at-risk-of-burn-in> [retrieved on 20220211]

## Description

### [Technical Field]

The present disclosure relates generally to wireless communication systems and, more specifically, the present disclosure relates to method and apparatus for dynamic adaptation on periodic or semi-persistent uplink transmissions in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

EP3751891A1 relates to a communication method and system for converging a 5th-Generation (5G) communication system for supporting higher data rates beyond a 4th-Generation (4G) system with a technology for Internet of Things (loT). The present disclosure provides a method and an apparatus of a terminal and a base station in a wireless communication system supporting a DRX operation, the method of the terminal comprises receiving, from a base station, configuration information related to at least one of periodic measurement or periodic reporting, receiving, from the base station, control information indicating whether the terminal is to monitor a downlink control channel, and performing at least one of the periodic measurement or the periodic reporting based on the configuration information in case that the control information indicates that the terminal is to skip monitoring the downlink control channel.

US 2022 060981A1 discloses a wireless device which receives one or more radio resource control messages comprising configuration parameters of a configured uplink grant Type 1 associated with a cell. The wireless device transmits one or more transport blocks based on the configured uplink grant Type 1. The wireless device transitions the cell to a dormancy in response to receiving a downlink control information (DCI). The wireless device suspends the configured uplink grant Type 1 associated with the cell in response to the transitioning the cell to the dormancy.

### [Disclosure of Invention]

### [Technical Problem]

The present disclosure relates to apparatuses and methods for dynamic adaptation on periodic or semi-persistent uplink transmissions in a wireless communication system.

### [Solution to Problem]

The invention is set out in the appended set of claims

### [Advantageous Effects of Invention]

Aspects of the present disclosure provide efficient communication methods in a wireless communication system.

### [Brief Description of Drawings]

For a more complete understanding of the present disclosure and its advantages, reference is now made to the following description taken in conjunction with the accompanying drawings, in which like reference numerals represent like parts:
FIGURE 1 illustrates an example wireless network according to embodiments of the present disclosure;
FIGURE 2 illustrates an example gNodeB (gNB) according to embodiments of the present disclosure;
FIGURE 3 illustrates an example user equipment (UE) according to embodiments of the present disclosure;
FIGURES 4 illustrates an example wireless transmit paths according to embodiments of the present disclosure;
FIGURES 5 illustrates an example wireless receive paths according to embodiments of the present disclosure;
FIGURE 6 illustrates an example method performed by a UE for the dynamic adaptation on periodic/semi-persistent (p/sp) sounding reference signal (SRS) resources transmissions in the downlink (DL) according to embodiments of the present disclosure;
FIGURE 7 illustrates an example method performed by a UE for the dynamic adaptation on p/sp channel state information (CSI) reports in uplink (UL) according to embodiments of the present disclosure;
FIGURE 8 illustrates an example method performed by a UE for the dynamic adaptation on p/sp physical layer resources for scheduling request (SR) in UL according to embodiments of the present disclosure;
FIGURE 9 illustrates a block diagram of a terminal (or a user equipment (UE), according to embodiments of the present disclosure; and
FIGURE 10 illustrates a block diagram of a base station, according to embodiments of the present disclosure.

### [Best Mode for Carrying out the Invention]

Accordingly, the embodiment herein is to provide a base station (BS) in a wireless communication system. The BS includes a processor configured to identify, from a set of configurations, a first set of configurations indicating resources for receiving a periodic or semi-persistent uplink transmission. The processor further configured to identify, from the set of configurations, a second set of configurations for a physical downlink control channel (PDCCH) including a downlink control information (DCI) format, wherein the DCI format includes adaptation information. The BS includes a transceiver operably coupled to the processor, the transceiver configured to transmit the set of configurations by a higher layer. the transceiver further configured to receive the periodic or semi-persistent uplink transmission based on the first set of configurations, and transmit the PDCCH including the DCI format based on the second set of configurations. Further, the processor is further configured to, based on the adaptation information, identify a third set of configurations indicating the resources for receiving the periodic or semi-persistent uplink transmission. Further, the transceiver is further configured to receive the periodic or semi-persistent uplink transmission based on the third set of configurations.

In an embodiment, by the BS, the periodic or semi-persistent uplink transmission includes: a periodic or semi-persistent sounding reference signal (SRS), a periodic or semi-persistent channel state information (CSI) report, or a scheduling request (SR).

In an embodiment, by the BS, the resources based on the third set of configurations include no resources for the periodic or semi-persistent uplink transmission.

In an embodiment, by the BS, the first set of configurations or the third set of configurations include a periodicity or a number of resources for the periodic or semi-persistent uplink transmission.

In an embodiment, by the BS, the second set of configurations include a configuration for a common search space (CSS) set. Further, the PDCCH is monitored based on the CSS set. Further, the PDCCH is cell-specific or group-common.

In an embodiment, by the BS, the adaptation information includes an indication on availability of the periodic or semi-persistent uplink transmission. Further, the indication on availability is based on a set of code-points. Further, each code-point in the set of code-points corresponds to a sub-set of resources for the periodic or semi-persistent uplink transmission within the resources for the periodic or semi-persistent uplink transmission.

In an embodiment, by the BS, the adaptation information includes a timer. Further, the third set of configurations is valid before the timer expires.

Accordingly, the embodiment herein is to provide a user equipment (UE) in a wireless communication system. The UE includes a transceiver configured to receive a set of configurations from a higher layer. The UE further includes a processor operably coupled to the transceiver, the processor configured to identify, from the set of configurations, a first set of configurations indicating resources for a periodic or semi-persistent uplink transmission, and identify, from the set of configurations, a second set of configurations for a physical downlink control channel (PDCCH) including a downlink control information (DCI) format, wherein the DCI format includes adaptation information. Further, the transceiver is further configured to perform the periodic or semi-persistent uplink transmission based on the first set of configurations. Further, and receive the PDCCH including the DCI format based on the second set of configurations. Further, the processor is further configured to, based on the adaptation information, identify a third set of configurations indicating the resources for the periodic or semi-persistent uplink transmission. Further, the transceiver is further configured to perform the periodic or semi-persistent uplink transmission based on the third set of configurations.

In an embodiment, by the UE, the periodic or semi-persistent uplink transmission includes a periodic or semi-persistent sounding reference signal (SRS), a periodic or semi-persistent channel state information (CSI) report, or a scheduling request (SR).

In an embodiment, by the UE, the resources based on the third set of configurations include no resources for the periodic or semi-persistent uplink transmission.

In an embodiment, by the UE, the first set of configurations or the third set of configurations include a periodicity or a number of resources for the periodic or semi-persistent uplink transmission.

In an embodiment, by the UE, the second set of configurations include a configuration for a common search space (CSS) set. Further, the PDCCH is monitored based on the CSS set. Further, the PDCCH is cell-specific or group-common.

In an embodiment, by the UE, the adaptation information includes an indication on availability of the periodic or semi-persistent uplink transmission. Further, the indication on availability is based on a set of code-points. Further, each code-point in the set of code-points corresponds to a sub-set of resources for the periodic or semi-persistent uplink transmission within the resources for the periodic or semi-persistent uplink transmission.

In an embodiment, by the UE, the adaptation information includes a timer. Further, the third set of configurations is valid before the timer expires.

Accordingly, the embodiment herein is to provide a method of a user equipment (UE) in a wireless communication system. The method includes receiving a set of configurations from a higher layer. The method includes identifying, from the set of configurations, a first set of configurations indicating resources for a periodic or semi-persistent uplink transmission. The method includes identifying, from the set of configurations, a second set of configurations for a physical downlink control channel (PDCCH) including a downlink control information (DCI) format. Further, the DCI format includes adaptation information. The method includes performing the periodic or semi-persistent uplink transmission based on the first set of configurations. The method includes receiving the PDCCH including the DCI format based on the second set of configurations. The method includes identifying, based on the adaptation information, a third set of configurations indicating the resources for the periodic or semi-persistent uplink transmission. The method includes performing the periodic or semi-persistent uplink transmission based on the third set of configurations.

In an embodiment, the periodic or semi-persistent uplink transmission includes: a periodic or semi-persistent sounding reference signal (SRS), a periodic or semi-persistent channel state information (CSI) report, or a scheduling request (SR).

In an embodiment, the resources based on the third set of configurations include no resources for the periodic or semi-persistent uplink transmission.

In an embodiment, the first set of configurations or the third set of configurations include a periodicity or a number of resources for the periodic or semi-persistent uplink transmission.

In an embodiment, the second set of configurations include a configuration for a common search space (CSS) set. Further, the PDCCH is monitored based on the CSS set. Further, the PDCCH is either cell-specific or group-common.

In an embodiment, the adaptation information includes an indication on availability of the periodic or semi-persistent uplink transmission, wherein the indication on availability is based on a set of code-points and wherein each code-point in the set of code-points corresponds to a sub-set of resources for the periodic or semi-persistent uplink transmission within the resources for the periodic or semi-persistent uplink transmission, and a timer, wherein the third set of configurations is valid before the timer expires.

### [Mode for the Invention]

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

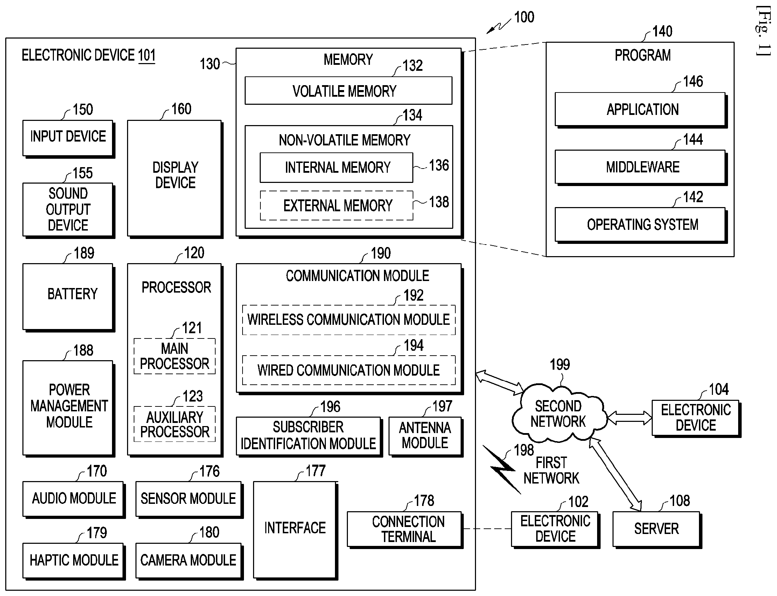

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably-arranged system or device.

Wireless communication has been one of the most successful innovations in modern history. Recently, the number of subscribers to wireless communication services exceeded five billion and continues to grow quickly. The demand of wireless data traffic is rapidly increasing due to the growing popularity among consumers and businesses of smart phones and other mobile data devices, such as tablets, "note pad" computers, net books, eBook readers, and machine type of devices. In order to meet the high growth in mobile data traffic and support new applications and deployments, improvements in radio interface efficiency and coverage is of paramount importance.

To meet the demand for wireless data traffic having increased since deployment of 4G communication systems, and to enable various vertical applications, 5G/NR communication systems have been developed and are currently being deployed.

In addition, in 5G/NR communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancelation and the like.

The discussion of 5G systems and frequency bands associated therewith is for reference as certain embodiments of the present disclosure may be implemented in 5G systems. However, the present disclosure is not limited to 5G systems, or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise; a UE 113, which may be a WiFi hotspot; a UE 114, which may be located in a first residence; a UE 115, which may be located in a second residence; and a UE 116, which may be a mobile device, such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, long term evolution (LTE), long term evolution-advanced (LTE-A), WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G/NR base station (gNB), a macrocell, a femtocell, a WiFi access point (AP), or other wirelessly enabled devices. Base stations may provide wireless access in accordance with one or more wireless communication protocols, e.g., 5G/NR 3rd generation partnership project (3GPP) NR, long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof for supporting dynamic adaptation on periodic or semi-persistent uplink transmissions. In certain embodiments, one or more of the BSs 101-103 include circuitry, programing, or a combination thereof for supporting dynamic adaptation on periodic or semi-persistent uplink transmissions.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

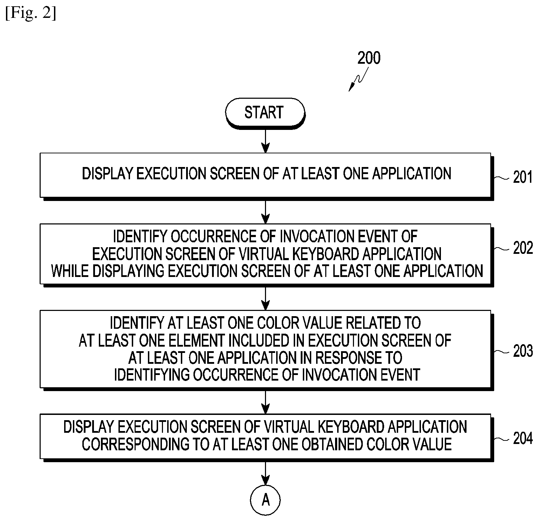

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple transceivers 210a-210n, a controller/processor 225, a memory 230, and a backhaul or network interface 235.

The transceivers 210a-210n receive, from the antennas 205a-205n, incoming RF signals, such as signals transmitted by UEs in the network 100. The transceivers 210a-210n down-convert the incoming RF signals to generate IF or baseband signals. The IF or baseband signals are processed by receive (RX) processing circuitry in the transceivers 210a-210n and/or controller/processor 225, which generates processed baseband signals by filtering, decoding, and/or digitizing the baseband or IF signals. The controller/processor 225 may further process the baseband signals.

Transmit (TX) processing circuitry in the transceivers 210a-210n and/or controller/processor 225 receives analog or digital data (such as voice data, web data, e-mail, or interactive video game data) from the controller/processor 225. The TX processing circuitry encodes, multiplexes, and/or digitizes the outgoing baseband data to generate processed baseband or IF signals. The transceivers 210a-210n up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of UL channel signals and the transmission of DL channel signals by the transceivers 210a-210n in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. As another example, the controller/processor 225 could support methods for supporting dynamic adaptation on periodic or semi-persistent uplink transmissions. Any of a wide variety of other functions could be supported in the gNB 102 by the controller/processor 225.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. Also, various components in FIGURE 2 could be combined, further subdivided, or omitted and additional components could be added according to particular needs.

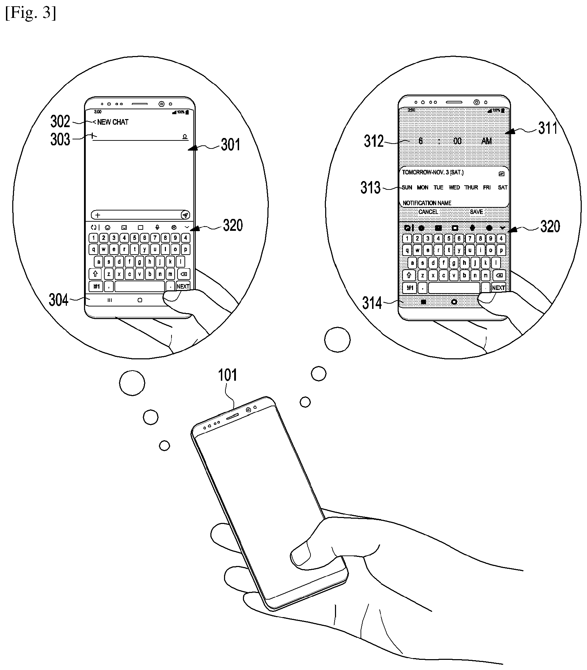

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes antenna(s) 305, a transceiver(s) 310, and a microphone 320. The UE 116 also includes a speaker 330, a processor 340, an input/output (I/O) interface (IF) 345, an input 350, a display 355, and a memory 360. The memory 360 includes an operating system (OS) 361 and one or more applications 362.

The transceiver(s) 310 receives, from the antenna 305, an incoming RF signal transmitted by a gNB of the network 100. The transceiver(s) 310 down-converts the incoming RF signal to generate an intermediate frequency (IF) or baseband signal. The IF or baseband signal is processed by RX processing circuitry in the transceiver(s) 310 and/or processor 340, which generates a processed baseband signal by filtering, decoding, and/or digitizing the baseband or IF signal. The RX processing circuitry sends the processed baseband signal to the speaker 330 (such as for voice data) or is processed by the processor 340 (such as for web browsing data).

TX processing circuitry in the transceiver(s) 310 and/or processor 340 receives analog or digital voice data from the microphone 320 or other outgoing baseband data (such as web data, e-mail, or interactive video game data) from the processor 340. The TX processing circuitry encodes, multiplexes, and/or digitizes the outgoing baseband data to generate a processed baseband or IF signal. The transceiver(s) 310 up-converts the baseband or IF signal to an RF signal that is transmitted via the antenna(s) 305.

The processor 340 can include one or more processors or other processing devices and execute the OS 361 stored in the memory 360 in order to control the overall operation of the UE 116. For example, the processor 340 could control the reception of DL channel signals and the transmission of UL channel signals by the transceiver(s) 310 in accordance with well-known principles. In some embodiments, the processor 340 includes at least one microprocessor or microcontroller.

The processor 340 is also capable of executing other processes and programs resident in the memory 360, such as processes for supporting dynamic adaptation on periodic or semi-persistent uplink transmissions. The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the input 350, which includes for example, a touchscreen, keypad, etc., and the display 355. The operator of the UE 116 can use the input 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random-access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). In another example, the transceiver(s) 310 may include any number of transceivers and signal processing chains and may be connected to any number of antennas. Also, while FIGURE 3 illustrates the UE 116 configured as a mobile telephone or smartphone, UEs could be configured to operate as other types of mobile or stationary devices.

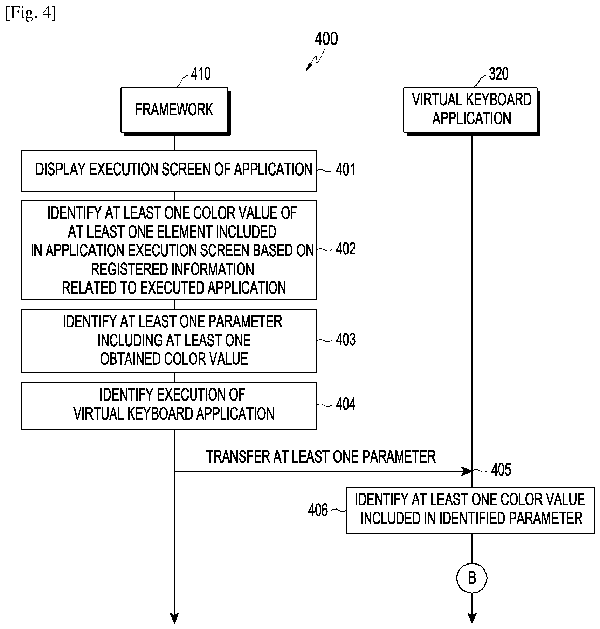

FIGURE 4 illustrates an example wireless transmit paths according to this disclosure. In the following description, a transmit path 400, of FIGURE 4, may be described as being implemented in a BS (such as the BS 102). However, it may be understood that the transmit path 400 can be implemented in a UE.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols. The serial-to-parallel block 410 converts (such as de-multiplexes) the serial modulated symbols to parallel data in order to generate N parallel symbol streams, where N is the IFFT/FFT size used in the BS 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the BS 102 arrives at the UE 116 after passing through the wireless channel, and reverse operations to those at the BS 102 are performed at the UE 116.

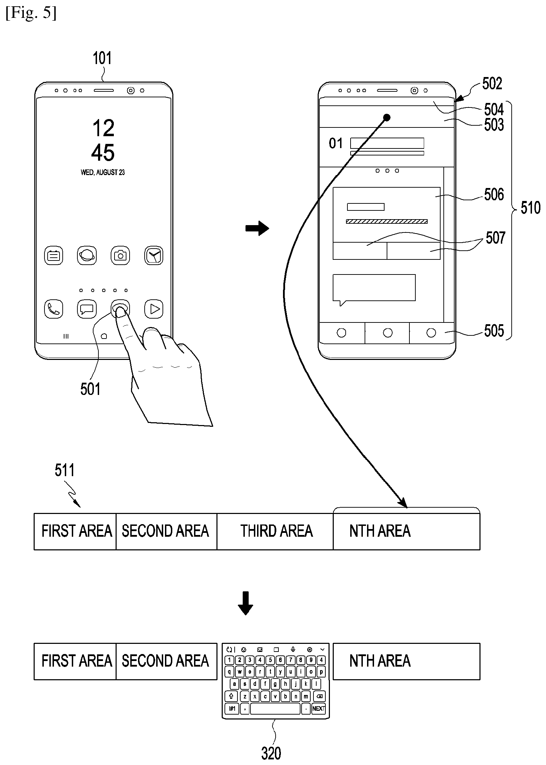

FIGURE 5 illustrates an example wireless receive paths according to this disclosure. In the following description, a receive path 500, of FIGURE 5, may be described as being implemented in a UE (such as a UE 116). However, it may be understood that the receive path 500 can be implemented in a BS. In some embodiments, the receive path 500 is configured to support dynamic adaptation on periodic or semi-persistent uplink transmissions as described in embodiments of the present disclosure.

The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 5, the down-converter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the BSs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the BSs 101-103 and may implement the receive path 500 for receiving in the downlink from the BSs 101-103.

Each of the components in FIGURE 4 and FIGURE 5 can be implemented using hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 415 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

Various embodiments of the present disclosure recognize that with the increasing number of 5G base states deployed to support 5G wireless communications, the power consumption of 5G network has become a heavy burden to operators. The power consumption of a single NR based station is +3 times higher than LTE, due to higher frequency band, wider bandwidth and massive MIMO operation. In NR Rel-16/17, several UE power saving schemes have been introduced to reduce energy consumption for UEs. To maintain a sustainable 5G deployment, it is important to consider efficient energy saving mechanisms from the network (NW) perspective.

Various embodiments of the present disclosure recognize that an issue for NW energy savings regarding periodic or semi-Persistent transmissions in UL is large energy consumption on gNB to receive periodic/semi-persistent (p/sp) sounding reference signals (SRS). NR supports SRS resources configured per UL BWP, in srs-Config, via UE-specific RRC signaling. It takes large energy consumption on gNB to adapt the availability of the p/sp SRS resources based on semi-static (de)activation of SRS resources via higher layer signaling. Also, the reconfiguration of the SRS resources, such as update of periodicity, has to be done via UE specific RRC signaling, which costs larger energy consumption on gNB.

Various embodiments of the present disclosure recognize that an issue for NW energy savings regarding periodic or semi-Persistent transmissions in UL is large energy consumption on gNB to receive periodic/semi-persistent CSI report. NR supports periodic or semi-persistent report on PUCCH and semi-persistent CSI report on PUSCH. The configuration of periodic or semi-Persistent transmissions are provided to UE in *CSI ReportConfig* via UE-specific RRC signalling. So, it takes large energy consumption on gNB to adapt the availability of the PUCCH or PUSCH resources via higher layer signaling. Also, the reconfiguration of the periodic/semi-persistent CSI report, such as update of periodicity, has to be done via UE specific RRC signaling, which costs larger energy consumption on gNB.

Various embodiments of the present disclosure recognize that another issue for NW energy savings regarding periodic or semi-Persistent transmissions in UL is large energy consumption on scheduling request (SR). NR supports multiple configurations of periodic resources for SR, SchedulingRequestResourceConfig, via UE-specific RRC signaling. gNB monitors periodic PUCCH for reception of SR. It takes large energy consumption on gNB to adapt the configuration of SR and/or availability of the PUCCH resources for SR via higher layer signaling.

Accordingly, various embodiments of the present disclosure provide mechanisms for determining dynamic adaptation on periodic or semi-persistent SRS in UL. Further, various embodiments of the present disclosure provide mechanisms for determining dynamic adaptation on periodic or semi-persistent CSI report in UL. Additionally, various embodiments of the present disclosure provide mechanisms for determining dynamic adaptation on periodic or semi-persistent physical layer resources for SR in UL.

In one embodiment, triggering methods for dynamic adaptation on periodic or semi-persistent (s/sp) sounding reference signal (SRS) in UL are provided.

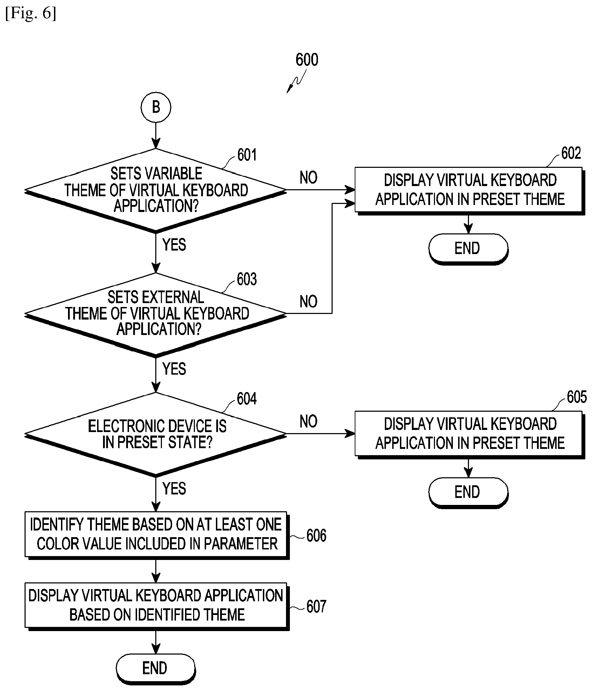

FIGURE 6 illustrates an example method 600 performed by a UE for the dynamic adaptation on p/sp SRS resources transmissions in the DL according to embodiments of the present disclosure. The embodiment of the example method 600 performed by a UE for the dynamic adaptation on p/sp SRS resources transmissions in the DL illustrated in FIGURE 6 is for illustration only. Other embodiments of the example method 600 performed by a UE for the dynamic adaptation on p/sp SRS resources transmissions in the DL could be used without departing from the scope of this disclosure.

As illustrated in FIGURE 6, at step 601, a UE (such as the UE 116) receives a first configuration for a number of p/sp SRS resources. At step 602, the UE also receives a second configuration for a physical layer signal/channel (e.g., a broadcast/multicast physical layer signal/channel) which carries an adaptation indication on the number of p/sp SRS resources. At step 603, the UE receives the physical layer signal/channel in a reception occasion according to the second configuration. At step 604, the UE determines activated SRS resources from the number p/sp SRS resources and/or corresponding physical layer resources configuration based on the adaptation indication carried in the received physical layer signal/channel. At step 605, the UE transmits the activated SRS resources, and does not expect to transmit other SRS resources (e.g., SRS resources other than the activated SRS resources) from the number of p/sp SRS resources.

A UE can receive a first configuration for a number of p/sp SRS resources transmitted from one or more serving cell(s). The first configuration can be provided to the UE either by dedicated RRC signaling (e.g., UE-specific RRC signaling) or SIB. For example, the first number of p/sp SRS resources can be one or multiple set of SRS resources, wherein configuration for each set of SRS resources is provided by a configuration parameter, e.g., *SRS-ResourceSet* in REF5, via RRC signaling.

The UE can receive a second configuration for a physical layer signal/channel from a serving cell, wherein the physical layer signal/channel is configured with or associated with an adaptation indication to provide physical layer resources for the number of p/sp SRS resources.

In one approach for determining the physical layer signal/channel for triggering the dynamic adaptation, the physical layer signal/channel is a PDCCH broadcast to all connected UEs in the serving cell (e.g., a cell-specific PDCCH). The UE is configured to monitor or receive the cell-specific PDCCH in common search space (CSS). The PDCCH carries a DCI format with CRC bits scrambled by a RNTI which is common to all connected UEs in the serving cell, wherein the adaptation indication is a field in the DCI format. The UE can receive the second configuration in a SIB. In one example, the RNTI can be dedicated to cell-specific adaptation for NW energy savings. In another example, the RNTI can be determined based on the cell ID. In yet another example, the RNTI can be provided to UE in a SIB. In one sub-example, the UE assumes the field in the DCI format consists of multiple blocks, wherein the UE is configured to receive the adaptation indication in at least one block of the multiple blocks. The UE can determine the block from the location of the one block in the payload of the DCI formation based on the second configuration.

In one approach for determining the physical layer signal/channel for triggering the dynamic adaptation, the physical layer signal/channel is a PDCCH multicast to a group of connected UEs in the serving cell (e.g., a group-common PDCCH). The UE is configured to monitor or receive the group common (GC) PDCCH in common search space. The PDCCH carries a DCI format with CRC bits scrambled by a RNTI which is common to the group of connected UEs in the serving cell, wherein the adaptation indication is a field in the DCI format. The UE can receive the second configuration in via RRC signaling. In one example, the RNTI can be dedicated to cell-specific adaptation for NW energy savings. In another example, the RNTI can be group RNTI (G-RNTI). In another example, the RNTI can be SFI-RNTI. In one sub-example, the UE assumes the field in the DCI format consists of multiple blocks, wherein the UE is configured to receive the adaptation indication in at least one block of the multiple blocks. The UE can determine the block from the location of the one block in the payload of the DCI formation based on the second configuration.

In one approach for determining the physical layer signal/channel for triggering the dynamic adaptation, the physical layer signal/channel is a DL signal that is constructed based on a sequence. The DL signal is broadcast to all connected UEs in the serving cell. The sequence in the DL signal carries the adaptation indication. The sequence in the DL signal can also carry the RNTI which is common to all connected UEs in the serving cell. In one example, the RNTI can be dedicated to cell-specific adaptation for NW energy savings. In another example, the RNTI can be determined based on the cell ID. In another example, the RNTI can be provided to UE in a SIB. The UE can receive the second configuration in a SIB.

In one approach for determining the physical layer signal/channel for triggering the dynamic adaptation, the physical layer signal/channel is a DL signal that is constructed based on a sequence. The DL signal is multicast to a group of connected UEs in the serving cell. The sequence in the DL signal carries the adaptation indication. The sequence in the DL signal can also carry the RNTI which is common to the group of connected UEs in the serving cell. In one example, the RNTI can be dedicated to cell-specific adaptation for NW energy savings. In another example, the RNTI can be group RNTI (G-RNTI). In yet another example, the RNTI can be SFI-RNTI. The UE can receive the second configuration via RRC signaling.

The UE can determine a monitoring periodicity, *Tₛ* , for reception of the physical layer signal/channel with an adaptation indication on physical layer resources for the number of p/sp SRS resources, based on at least one of the following approaches:
- In one approach, *Tₛ* can be a number of slots or millisecond that is provided to the UE by higher layer signaling. For example, *Tₛ* is provided to the UE in the first configuration for the physical layer signal/channel.
- In one approach, *Tₛ* is one or multiple monitoring periodicity for DRX cycle configured for the UE in RRC_CONNECTED state (C-DRX), such that *Tₛ = k* · *Tₚ,* wherein *k* is positive integer and *Tₚ* is the C-DRX cycle. In one example, *k* can be provided to the UE by higher layer signaling, e.g., in a SIB or in the first configuration for the physical layer signal/channel. In another example, *k* can be defined in the system operation, for example, *k = 1.*

The UE can determine an offset, *Oₛ*, for reception of the physical layer signal/channel with an adaptation indication on physical layer resources for the number of p/sp SRS resources, wherein the UE determines start of one or more reception occasion(s) for the physical layer signal/channel per a monitoring periodicity based on *Oₛ*. For example, the first slot for the one or more reception occasions for the physical layer signal/channel, *nₛ*, can be determined, such that ${n}_{s} = mod \left({n}_{sfn}\times {N}_{slots}^{sfn},{T}_{s}\right)$ **,** wherein *n_{sfn}* is SFN number, and ${N}_{slots}^{sfn}$ is a number of slots per a SFN. For another example, the first slot for the one or more reception occasions for the physical layer signal/channel, *nₛ*, can be determined as a first slot that is at least *Oₛ* before a reference timing. For instance, the reference timing can be the start of next DRX ON duration.

The UE can determine a duration, *Dₛ*, for reception of the physical layer signal/channel with an adaptation indication on physical layer resources for the number of p/sp SRS resources, wherein the UE can receive the physical layer signal/channel in any slot within the duration per a monitoring periodicity, The duration *Dₛ* can consists of a number of N>=1 reception occasions for the physical layer signal/channel, wherein each reception occasion is QCLed with a reference signal (RS). In one example, a RS can be a SSB from the burst of SSBs configured by *ssb-PositionsInBurst,* e.g., in SIB1 or dedicated signaling. In another example, a RS can be provided to the UE by higher layer signaling, e.g., in the first configuration for the physical layer signal/channel.

In one embodiment, adaptation aspects for dynamic adaptation on periodic or semi-persistent (s/sp) sounding reference signal (SRS) in UL is considered.

A value of the adaptation indication carried in a physical layer signal/channel is referred as a code-point. The adaptation indication can indicate a code-point from a set of code-points.

In one approach for determining the adaptation aspect on physical layer resources for the number of p/sp SRS resources, a code-point can indicate a subset of SRS resources from the number of p/sp SRS resources that are activated (e.g., the number of p/sp SRS resources can be 0, which implies no transmission of p/sp SRS).
- In a first example, a code-point indicates a group of SRS resources from the number of p/sp SRS resources. The number of code-points can equal to the number of groups of SRS resources from the number of p/sp SRS resources. A code-point indicates a group index for a group of SRS resources that are activated.
- In a second example, the adaptation indication can be a bitmap, wherein each bit from the bitmap is associated with a group of SRS resources from the number of p/sp SRS resources. A binary value for each bit indicates whether or not the associated group of SRS resources are activated. The UE can determine the i-th bit is associated with i-th group of SRS resources with group index of (i-1), wherein the value of group index starts from 0.

The UE can determine the grouping of the SRS resources from the number of p/sp SRS resources and a group index for each group/set of SRS resources from the number of p/sp SRS resources.
- For one sub-example, the group index can be provided in the first configuration, wherein the configuration for each set of SRS resources includes an identity as the group index.
- For another sub-example, the group index can be provided in the first configuration, wherein the configuration for each SRS resource includes a group index.
- For yet another sub-example, the group index can be provided in the first configuration, wherein the configuration provides information to indicate one or more SRS resources from the number of p/sp SRS resources. The information can be multiple lists of SRS resources indexes, wherein each list of SRS resources indexes corresponds to a group of SRS resources.
- For yet another sub-example, the grouping can be based on a group size, and the group size can be either fixed or provided to the UE, e.g., provided in the first configuration.

In one approach for determining the adaptation aspect on physical layer resources for the number of p/sp SRS resources, a code-point can indicate a time duration (e.g., a timer), wherein the UE expects a portion or all of the number of p/sp SRS resources are activated or deactivated. The time duration can be a number of slots. The portion of the number of p/sp SRS resources can be provided to the UE by higher layers or in the physical layer signal/channel provides the adaptation indication. UE can be provided with multiple candidate values for the time duration, and a code-point indicates one of the multiple candidate values.

In one approach for determining the adaptation aspect on physical layer resources for the number of p/sp SRS resources, a code-point can indicate a periodicity for one or more SRS resource(s) from the number of p/sp SRS resources. The UE can be provided with multiple candidate configurations for the periodicity, and a code-point maps to one of the multiple candidate configurations for the periodicity.

When the UE receives the physical layer signal/channel with the adaptation indication on physical layer resources for p/sp SRS resources, the UE applies the adaptation indication at a reference point. The UE can determine the reference point based on at least one of the following approaches:
- In one approach, the reference point is start of next periodicity of the applicable SRS resources.
- In one approach, the reference point is first slot/symbol that is at least a number of N>=1 slots/symbols/milliseconds after the last slot/symbol of the physical layer signal/channel with the adaptation indication. The number of N>=1 slots/symbols/milliseconds can be provided to the UE by higher layer signaling and/or according to UE capability.
- In one approach, the reference point is start of a next C-DRX cycle, wherein the next C-DRX cycle is the first C-DRX cycle that is after the last symbol of the physical layer signal/channel where the UE receives the adaptation indication. The start of next C-DRX cycle can be the start of the first slot/SFN of the next C-DRX cycle.
- In one approach, the reference point is start of next C-DRX cycle, wherein the next C-DRX cycle is the first C-DRX cycle after the current C-DRX cycle where the UE receives the adaptation indication. When the physical layer signal/channel where the UE receives the adaptation indication occupies time domain resources across two C-DRX cycles, the current C-DRX cycle can be the earlier C-DRX cycle of the two C-DRX cycles or the latter C-DRX cycle of the two C-DRX cycles. The start of next C-DRX cycle can be the start of the first slot/SFN of the next C-DRX cycle.

After the UE applies an adaptation indication on physical layer resources for p/sp SRS resources, the UE can assume the validity period or effective period of the adaptation indication based on one of the following approaches:
- In one approach, the UE assumes the adaptation indication is valid till the UE receives another adaptation indication.
- In one approach, the UE assumes the adaptation indication is valid for a time duration. The unit of the time duration can be a slot or a millisecond or a monitoring periodicity of applicable SRS resources. In one example, the time duration can be provided to the UE by higher layers, e.g., via dedicated RRC signaling or in SIB. In another example, the time duration can be predetermined in the specification of the system operation. In yet another example, the time duration can be provided in the physical layer signal/channel carries the adaptation indication.
- In one approach, the UE assumes the adaptation indication is valid within active time for next one or more C-DRX cycles.

One embodiment of this disclosure considers dynamic adaptation on periodic or semi-persistent (s/sp) CSI report in UL.

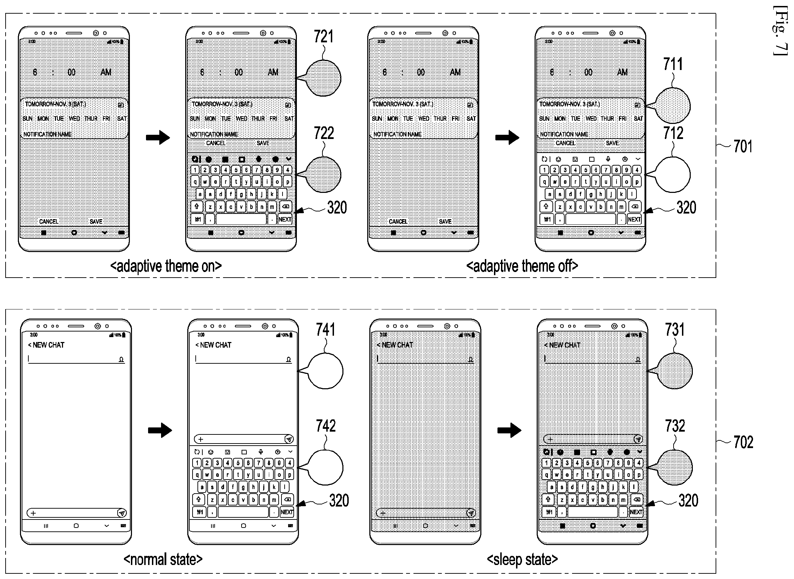

FIGURE 7 illustrates an example method 700 performed by a UE for the dynamic adaptation on p/sp CSI reports in UL according to embodiments of the present disclosure. The embodiment of the example method 700 performed by a UE for the dynamic adaptation on p/sp CSI reports in UL shown in FIGURE 7 is for illustration only. Other embodiments of the example method 700 performed by a UE for the dynamic adaptation on p/sp CSI reports in UL could be used without departing from the scope of this disclosure.

As illustrated in FIGURE 7, at step 701, a UE (such as the UE 116) receives a first configuration for a number of p/sp CSI report(s). At step 702, the UE also receives a second configuration for a physical layer signal/channel (e.g., a broadcast/multicast physical layer signal/channel) which carries an adaptation indication on the number of p/sp CSI report(s). At step 703, the UE receives the physical layer signal/channel in a reception occasion according to the second configuration. At step 704, the UE determines activated CSI report(s) from the number p/sp CSI report(s) and/or corresponding physical layer resources configuration based on the adaptation indication carried in the received physical layer signal/channel. At step 705, the UE transmits the activated CSI report(s) in PUCCH or PUSCH, and does not expect to transmit other CSI report (e.g., other than the activated CSI report(s)) from the number of p/sp CSI report(s).

A UE can receive a first configuration for a number of p/sp CSI report(s) transmitted from one or more serving cell(s). The first configuration can be provided to the UE either by dedicated signaling (e.g., a UE-specific RRC signaling) or SIB. In one example, the configuration for each of the number of p/sp CSI report(s) is provided by a RRC configuration parameter, e.g., *CSI-ReportConfig* in in REF5. In another example, a p/sp CSI report from the number of p/sp CSI report(s) can be a periodic or semi-persistent report to be sent on PUCCH. In another example, a p/sp CSI report from the number of p/sp CSI report(s) can be a periodic or semi-persistent report to be sent on PUSCH. Configuration for a CSI report from the number of p/sp CSI report(s) can be provided with any of the following information,
- An identity for the CSI report, *ID_{CSI-ReportConfig}*,
- A periodicity for the CSI report, T, e.g., in terms of a number of slots,
- An offset for the CSI report, *O*, e.g., in terms of a number of slots, wherein *O < T,*
- Associated reference signal (RS) resource(s) for measurement, wherein the associated RS resource(s) for measurement has a reference identity, *ID_{CSI-ResourceConfig}.* For example, the RS resources can be non-zero power (NZP) CSI-RS resources.
- An indication of the p/sp physical layer channel to carry the p/sp CSI report, such as PUCCH or PUSCH.
- A group index, wherein the CSI report is from a group of CSI reports with the group index.

The UE can receive a second configuration for a physical layer signal/channel from a serving cell, wherein the physical layer signal/channel is configured with or associated with an adaptation indication to provide physical layer resources for the number of p/sp CSI report(s). The UE can assume at least one of the following approaches for the design of the physical layer signal/channel:
- In one approach, the physical layer signal/channel is a PDCCH broadcast to all connected UEs in the serving cell (e.g., a cell-specific PDCCH). The UE is configured to monitor or receive the cell-specific PDCCH in common search space. The PDCCH carries a DCI format with CRC bits scrambled by a RNTI which is common to all connected UEs in the serving cell, wherein the adaptation indication is a field in the DCI format. The UE can receive the second configuration in a SIB. In one example, the RNTI can be dedicated to cell-specific adaptation for NW energy savings. In another example, the RNTI can be determined based on the cell ID. In another example, the RNTI can be provided to UE in a SIB. In one sub-example, the UE assumes the field in the DCI format consists of multiple blocks, wherein the UE is configured to receive the adaptation indication in at least one block of the multiple blocks. The UE can determine the block from the location of the one block in the payload of the DCI formation based on the second configuration.
- In one approach, the physical layer signal/channel is a PDCCH multicast to a group of connected UEs in the serving cell. The UE is configured to monitor or receive the group common (GC) PDCCH in common search space. The PDCCH carries a DCI format with CRC bits scrambled by a RNTI which is common to the group of connected UEs in the serving cell, wherein the adaptation indication is a field in the DCI format. The UE can receive the second configuration in via RRC signaling. In one example, the RNTI can be dedicated to cell-specific adaptation for NW energy savings. In another example, the RNTI can be group RNTI (G-RNTI). In another example, the RNTI can be SFI-RNTI. In one sub-example, the UE assumes the field in the DCI format consists of multiple blocks, wherein the UE is configured to receive the adaptation indication in at least one block of the multiple blocks. The UE can determine the block from the location of the one block in the payload of the DCI formation based on the second configuration.
- In one approach, the physical layer signal/channel is a DL signal that is constructed based on a sequence. The DL signal is broadcast to all connected UEs in the serving cell. The sequence in the DL signal carries the adaptation indication. The sequence in the DL signal can also carry the RNTI which is common to all connected UEs in the serving cell. In one example, the RNTI can be dedicated to cell-specific adaptation for NW energy savings. In another example, the RNTI can be determined based on the cell ID. In yet another example, the RNTI can be provided to UE in a SIB. The UE can receive the second configuration in a SIB.
- In one approach, the physical layer signal/channel is a DL signal that is constructed based on a sequence. The DL signal is multicast to a group of connected UEs in the serving cell. The sequence in the DL signal carries the adaptation indication. The sequence in the DL signal can also carry the RNTI which is common to the group of connected UEs in the serving cell. In one example, the RNTI can be dedicated to cell-specific adaptation for NW energy savings. In another example, the RNTI can be group RNTI (G-RNTI). In yet another example, the RNTI can be SFI-RNTI. The UE can receive the second configuration via RRC signaling.

The UE can determine a monitoring periodicity, *Tₛ* , for reception of the physical layer signal/channel with an adaptation indication on physical layer resources for the number of p/sp CSI report(s), based at least on one of the following approaches:
- In one approach, *Tₛ* can be a number of slots or millisecond that is provided to the UE by higher layer signaling. For example, *Tₛ* is provided to the UE in the first configuration for the physical layer signal/channel.
- In one approach, *Tₛ* is one or multiple monitoring periodicity for DRX cycle configured for the UE in RRC_CONNECTED state (C-DRX), such that *Tₛ = k* · *Tₚ*, wherein *k* is positive integer and *Tₚ* is the C-DRX cycle. In one example, *k* can be provided to the UE by higher layer signaling, e.g., in a SIB or in the first configuration for the physical layer signal/channel. In another example, *k* can be defined in the system operation, for example, *k = 1.*

The UE can determine an offset, *Oₛ*, for reception of the physical layer signal/channel with an adaptation indication on physical layer resources for the number of p/sp CSI report(s), wherein the UE determines start of one or more reception occasion(s) for the physical layer signal/channel per a monitoring periodicity based on *Oₛ*. For example, the first slot for the one or more reception occasions for the physical layer signal/channel, *nₛ* , can be determined, such that ${n}_{s} = mod \left({n}_{sfn}\times {N}_{slots}^{sfn},{T}_{s}\right)$ , wherein *n_{sfn}* is SFN number, and ${N}_{slots}^{sfn}$ is a number of slots per a SFN. For another example, the first slot for the one or more reception occasions for the physical layer signal/channel, *nₛ*, can be determined as first slot that is at least *Oₛ* before a reference point. The reference point can be the start of next DRX ON duration.

The UE can determine a duration, *Dₛ*, for reception of the physical layer signal/channel with an adaptation indication on physical layer resources for the number of CSI report(s), wherein the UE can receive the physical layer signal/channel in any slot within the duration per a monitoring periodicity, The duration *Dₛ* can consists of a number of N>=1 reception occasions for the physical layer signal/channel, wherein each reception occasion is QCLed with a reference signal (RS). In one example, a RS can be a SSB from the burst of SSBs configured by ssb-PositionsInBurst, e.g., in SIB1 or dedicated signaling. In another example, a RS can be provided to the UE by higher layer signaling, e.g., in the first configuration for the physical layer signal/channel.

A value of the adaptation indication carried in the physical layer signal/channel is referred as a code-point. The adaptation indication can indicate a code-point from a set of code-points.

In one approach for determining the adaptation aspect on physical layer resources for the number of p/sp CSI report(s), a code-point can indicate a subset of CSI report(s) from the number of p/sp CSI report(s) that are activated (the number of p/sp CSI report(s) can be 0, which implies no p/sp CSI report(s)).
- In a first example, a code-point indicates a group of CSI report(s) from the number of p/sp CSI report(s). The number of code-points can equal to the number of groups of CSI report(s). A code-point indicates a group index for a group of CSI report(s) that are activated.
- In a second example, the adaptation indication can be a bitmap, wherein each bit from the bitmap is associated with a group of CSI report(s) from the number of p/sp CSI report(s). A binary value for each bit indicates whether or not the associated group of CSI report(s) are activated. The UE can determine the i-th bit is associated with i-th group of CSI report(s) with group index of (i-1), wherein the value of group index starts from 0.

The UE can determine a group index for each group/set of CSI report(s) from the number of p/sp CSI report(s).
- For one sub-example, the group index can be provided in the first configuration, wherein the configuration for each CSI report includes an identity as the group index.
- For another sub-example, the group index can be provided in the first configuration, wherein the configuration provides information to indicate one or more CSI report(s) from the number of p/sp CSI report(s). The information can be multiple lists of CSI report indexes, wherein each list of CSI report indexes corresponds to a group of CSI report(s).
- For another sub-example, the group index can be derived based on associated RS resource(s) for measurement, wherein the number of p/sp CSI report(s) can be divided into multiple groups according to associated RS resource(s) for measurement. A group of CSI report(s) is deactivated if associated RS resource(s) for measurement are deactivated either by L1 signal/channel or higher layers. A group of CSI report(s) is activated if associated RS resource(s) for measurement are activated either by L1 signal/channel or higher layers.
- For another sub-example, the group index can be derived based on associated p/sp physical layer channel to carry the p/sp CSI report, wherein the number of p/sp CSI report(s) can be divided into multiple groups according to associated physical layer channel to report p/sp CSI report. A group of CSI report(s) is deactivated if associated physical layer channel to report p/sp CSI report are deactivated either by L1 signal/channel or higher layers. A group of CSI report(s) is activated if associated physical layer channel to report p/sp CSI report are activated either by L1 signal/channel or higher layers.
- For another sub-example, the group index can be derived based on associated physical layer channel to carry the p/sp CSI report, wherein the number of p/sp CSI report(s) can be divided into multiple groups according to associated physical layer channels. A group of CSI report(s) is deactivated if associated physical layer channel to carry the p/sp CSI report are deactivated either by L1 signal/channel or higher layers. A group of CSI report(s) is activated if associated physical layer channel to carry the p/sp CSI report are activated either by L1 signal/channel or higher layers.
- For another sub-example, the grouping can be based on a group size, and the group size can be either fixed or provided to the UE, e.g., provided in the first configuration.

In one approach for determining the adaptation aspect on physical layer resources for the number of p/sp CSI report(s), a code-point can indicate a time duration, wherein the UE expects a portion or all of the number of p/sp CSI report(s) are activated or deactivated. The time duration can be a number of slots. The portion of the number of p/sp CSI report(s) can be provided to the UE by higher layers or in the physical layer signal/channel provides the adaptation indication. UE can be provided with multiple candidate values for the time duration, and a code-point indicates one of the multiple candidate values.

In one approach for determining the adaptation aspect on physical layer resources for the number of p/sp CSI report(s), a code-point can indicate a periodicity for one or more CSI report(s) from the number of p/sp CSI report(s). The UE can be provided with multiple candidate configurations for the periodicity, and a code-point maps to one of the multiple candidate configurations for the periodicity.

When the UE receives the physical layer signal/channel with the adaptation indication on physical layer resources for p/sp CSI report(s), the UE applies the adaptation indication at a reference point. The UE can determine the reference point based on at least one of the following approaches:
- In one approach, the reference point is start of next periodicity of the applicable CSI report(s).
- In one approach, the reference point is first slot/symbol that is at least a number of N>=1 slots/symbols/milliseconds after the last slot/symbol of the physical layer signal/channel with the adaptation indication. The number of N>=1 slots/symbols/milliseconds can be provided to the UE by higher layer signaling or according to UE capability.
- In one approach, the reference point is start of next C-DRX cycle, wherein the next C-DRX cycle is the first C-DRX cycle that is after the last symbol of the physical layer signal/channel where the UE receives the adaptation indication. The start of next C-DRX cycle can be the start of the first slot/SFN of the next C-DRX cycle.
- In one approach, the reference point is start of next C-DRX cycle, wherein the next C-DRX cycle is the first C-DRX cycle after the current C-DRX cycle where the UE receives the adaptation indication. When the physical layer signal/channel where the UE receives the adaptation indication occupies time domain resources across two C-DRX cycles, the current C-DRX cycle can be the earlier C-DRX cycle of the two C-DRX cycles or the latter C-DRX cycle of the two C-DRX cycles. The start of next C-DRX cycle can be the start of the first slot/SFN of the next C-DRX cycle.

After the UE applies an adaptation indication on physical layer resources for p/sp CSI report(s), the UE can assume the validity period or effective period of the adaptation indication based on one of the following approaches:
- In one approach, the UE assumes the adaptation indication is valid till the UE receives another adaptation indication.
- In one approach, the UE assumes the adaptation indication is valid for a time duration. The unit of the time duration can be a slot or a millisecond or a monitoring periodicity of applicable CSI report(s). In one example, the time duration can be provided to the UE by higher layers, e.g., via dedicated RRC signaling or in SIB. In another example, the time duration can be predetermined in the specification of the system operation. In yet another example, the time duration can be provided in the physical layer signal/channel carries the adaptation indication.
- In one approach, the UE assumes the adaptation indication is valid within active time for next one or more C-DRX cycles.

In one embodiment, dynamic adaptation on p/sp physical layer resources for SR in UL is considered.

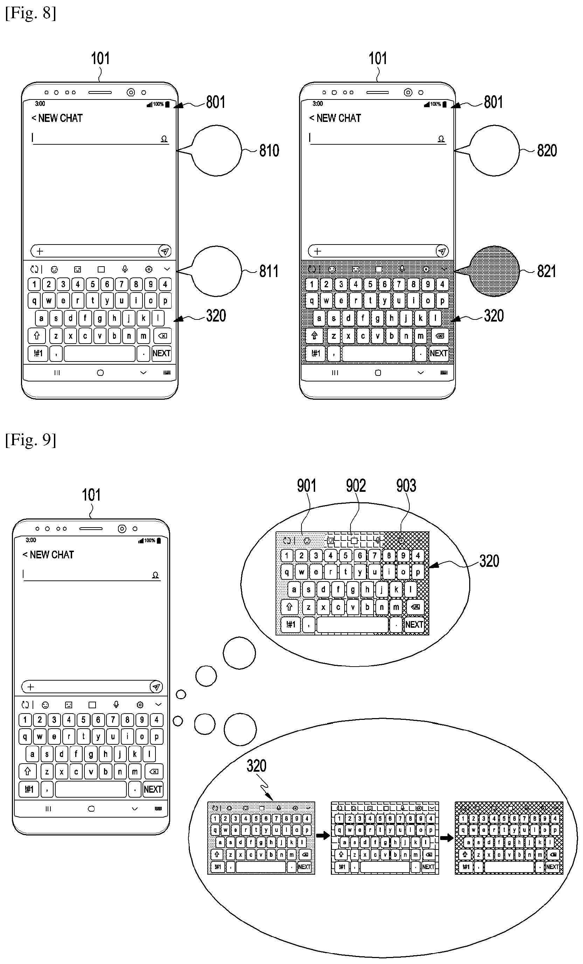

FIGURE 8 illustrates an example method 800 performed by a UE for the dynamic adaptation on p/sp physical layer resources for SR in UL according to embodiments of the present disclosure. The embodiment of the example method 800 performed by a UE for the dynamic adaptation on p/sp physical layer resources for SR in UL shown in FIGURE 8 is for illustration only. Other embodiments of the example method 800 performed by a UE for the dynamic adaptation on p/sp physical layer resources for SR in UL could be used without departing from the scope of this disclosure.

As illustrated in FIGURE 8, at step 801, a UE (such as the UE 116) receives a first configuration for a number of p/sp physical layer resources for SR. At step 802, the UE also receives a second configuration for a physical layer signal/channel (e.g., a broadcast/multicast physical layer signal/channel) which carries an adaptation indication on the number of p/sp physical layer resources for SR. At step 803, the UE receives the physical layer signal/channel in a reception occasion according to the second configuration. At step 804, the UE determines activated p/sp physical layer resource(s) for SR from the number p/sp physical layer resources and/or corresponding physical layer resources configuration based on the adaptation indication carried in the received physical layer signal/channel. At step 805, the UE transmits one or any of the activated p/sp physical layer resource(s) to indicate a positive SR or negative SR.

A UE can receive a first configuration for a number of p/sp physical layer resources for SR from one or more serving cell(s). The first configuration can be provided to the UE either by UE-specific RRC signaling or SIB. In one example, the configuration for each of the number of p/sp physical layer resources for SR is provided by a RRC configuration parameter, *SchedulingRequestResourceConfig,* e.g., in REF5. Configuration for a p/sp physical layer resource for SR from the number of p/sp physical layer resources for SR can be provided with any of the following information,
- An identity for the p/sp physical layer resource,
- A periodicity for the p/sp physical layer resource for SR, T, e.g., in terms of a number of slots,
- An offset for the p/sp physical layer resource, *O*, e.g., in terms of a number of slots, wherein *O < T,*
- Associated physical layer channel to include the SR, such as an identity for a PUCCH.

The UE can receive a second configuration for a physical layer signal/channel from a serving cell, wherein the physical layer signal/channel is configured with or associated with an adaptation indication to provide p/sp physical layer resources for SR. The UE can assume at least one of the following approaches for the design of the physical layer signal/channel:
- In one approach, the physical layer signal/channel is a PDCCH broadcast to all connected UEs in the serving cell. The UE is configured to monitor or receive the cell-specific PDCCH in common search space. The PDCCH carries a DCI format with CRC bits scrambled by a RNTI which is common to all connected UEs in the serving cell, wherein the adaptation indication is a field in the DCI format. The UE can receive the second configuration in a SIB. In one example, the RNTI can be dedicated to cell-specific adaptation for NW energy savings. In another example, the RNTI can be determined based on the cell ID. In yet another example, the RNTI can be provided to UE in a SIB. In one sub-example, the UE assumes the field in the DCI format consists of multiple blocks, wherein the UE is configured to receive the adaptation indication in at least one block of the multiple blocks. The UE can determine the block from the location of the one block in the payload of the DCI formation based on the second configuration.
- In one approach, the physical layer signal/channel is a PDCCH multicast to a group of connected UEs in the serving cell. The UE is configured to monitor or receive the group common (GC) PDCCH in common search space. The PDCCH carries a DCI format with CRC bits scrambled by a RNTI which is common to the group of connected UEs in the serving cell, wherein the adaptation indication is a field in the DCI format. The UE can receive the second configuration in via RRC signaling. In one example, the RNTI can be dedicated to cell-specific adaptation for NW energy savings. In another example, the RNTI can be group RNTI (G-RNTI). In yet another example, the RNTI can be SFI-RNTI. In one sub-example, the UE assumes the field in the DCI format consists of multiple blocks, wherein the UE is configured to receive the adaptation indication in at least one block of the multiple blocks. The UE can determine the block from the location of the one block in the payload of the DCI formation based on the second configuration.
- In one approach, the physical layer signal/channel is a DL signal that is constructed based on a sequence. The DL signal is broadcast to all connected UEs in the serving cell. The sequence in the DL signal carries the adaptation indication. The sequence in the DL signal can also carry the RNTI which is common to all connected UEs in the serving cell. In one example, the RNTI can be dedicated to cell-specific adaptation for NW energy savings. In another example, the RNTI can be determined based on the cell ID. In yet another example, the RNTI can be provided to UE in a SIB. The UE can receive the second configuration in a SIB.
- In one approach, the physical layer signal/channel is a DL signal that is constructed based on a sequence. The DL signal is multicast to a group of connected UEs in the serving cell. The sequence in the DL signal carries the adaptation indication. The sequence in the DL signal can also carry the RNTI which is common to the group of connected UEs in the serving cell. In one example, the RNTI can be dedicated to cell-specific adaptation for NW energy savings. In another example, the RNTI can be group RNTI (G-RNTI). In yet another example, the RNTI can be SFI-RNTI. The UE can receive the second configuration via RRC signaling.

The UE can determine a monitoring periodicity, *Tₛ* , for reception of the physical layer signal/channel with an adaptation indication on p/sp physical layer resources for SR based on at least one of the following approaches:
- In one approach, *Tₛ* can be a number of slots or millisecond that is provided to the UE by higher layer signaling. For example, *Tₛ* is provided to the UE in the first configuration for the physical layer signal/channel.
- In one approach, *Tₛ* is one or multiple monitoring periodicity for DRX cycle configured for the UE in RRC_CONNECTED state (C-DRX), such that *Tₛ = k* · *Tₚ,* wherein *k* is positive integer and *Tₚ* is the C-DRX cycle. In one example, *k* can be provided to the UE by higher layer signaling, e.g., in a SIB or in the first configuration for the physical layer signal/channel. In another example, *k* can be defined in the system operation, for example, *k* = 1.

The UE can determine an offset, *Oₛ*, for reception of the physical layer signal/channel with an adaptation indication on p/sp physical layer resources for SR, wherein the UE determines start of one or more reception occasion(s) for the physical layer signal/channel per a monitoring periodicity based on *Oₛ*. For example, the first slot for the one or more reception occasions for the physical layer signal/channel, *nₛ*, can be determined, such that ${n}_{s} = mod \left({n}_{sfn}\times {N}_{slots}^{sfn},{T}_{s}\right)$*,* wherein *n_{sfn}* is SFN number, and ${N}_{slots}^{sfn}$ is number of slots per a SFN. For another example, the first slot for the one or more reception occasions for the physical layer signal/channel, *nₛ*, can be determined as first slot that is at least *Oₛ* before a reference point. The reference point can be the start of next DRX ON duration.

The UE can determine a duration, *Dₛ*, for reception of the physical layer signal/channel with an adaptation indication on p/sp physical layer resources for SR, wherein the UE can receive the physical layer signal/channel in any slot within the duration per a monitoring periodicity, The duration *Dₛ* can consists of a number of N>=1 reception occasions for the physical layer signal/channel, wherein each reception occasion is QCLed with a reference signal (RS). In one example, a RS can be a SSB from the burst of SSBs configured by ssb-PositionsInBurst, e.g., in SIB1 or dedicated signaling. In another example, a RS can be provided to the UE by higher layer signaling, e.g., in the first configuration for the physical layer signal/channel.

A value of the adaptation indication carried in the physical layer signal/channel is referred as a code-point. The adaptation indication can indicate a code-point from a set of code-points.

In one approach for determining the adaptation aspect for the number of p/sp physical layer resources for SR, a code-point can indicate a subset of p/sp physical layer resources for SR from the number of p/sp physical layer resources for SR that are activated (the number of p/sp physical layer resources for SR can be 0, which implies no transmission of SR).
- In a first example, a code-point indicates a group of p/sp physical layer resource(s) from the number of p/sp physical layer resources. The number of code-points can equal to the number of p/sp physical layer resources. A code-point indicates a group index for a group of p/sp physical layer resource(s) that are activated.
- In a second example, the adaptation indication can be a bitmap, wherein each bit from the bitmap is associated with a group of p/sp physical layer resource(s) from the number of p/sp physical layer resource(s). A binary value for each bit indicates whether or not the associated group of p/sp physical layer resource(s) are activated. The UE can determine the i-th bit is associated with i-th group of p/sp physical layer resource(s) with group index of (i-1), wherein the value of group index starts from 0.

The UE can determine a group index for each group/set of p/sp physical layer resource(s) from the number of p/sp physical layer resources.
- For one sub-example, the group index can be provided in the first configuration, wherein the configuration for each p/sp physical layer resource includes an identity as the group index.
- For another sub-example, the group index can be provided in the first configuration, wherein the configuration provides information to indicate one or more p/sp physical layer resource(s) from the number of p/sp p/sp physical layer resources. The information can be multiple lists of p/sp physical layer resource indexes, wherein each list of p/sp physical layer resource indexes corresponds to a group of p/sp physical layer resource(s).
- For another sub-example, the group index can be derived based on associated physical layer channel to carry the p/sp SR, wherein the number of p/sp physical layer resources can be divided into multiple groups according to associated physical layer channels. A group of physical layer resource(s) for SR is deactivated if associated physical layer channel to carry the SR are deactivated either by L1 signal/channel or higher layers. A group of physical layer resource(s) for SR is activated if associated physical layer channel to carry the SR are activated either by L1 signal/channel or higher layers.
- For another sub-example, the grouping can be based on a group size, and the group size can be either fixed or provided to the UE, e.g., provided in the first configuration.

In one approach for determining the adaptation aspect for the number of p/sp physical layer resources for SR, a code-point can indicate a time duration, wherein the UE expects a portion or all of the number of p/sp physical layer resources for SR are activated or deactivated. The time duration can be a number of slots. The portion of the number of the number of p/sp physical layer resources for SR can be provided to the UE by higher layers or in the physical layer signal/channel provides the adaptation indication. UE can be provided with multiple candidate values for the time duration, and a code-point indicates one of the multiple candidate values.

In one approach for determining the adaptation aspect for the number of p/sp physical layer resources for SR, a code-point can indicate a periodicity for one or more p/sp physical layer resource(s) for SR from the number of p/sp physical layer resources for SR. The UE can be provided with multiple candidate configurations for the periodicity, and a code-point maps to one of the multiple candidate configurations for the periodicity.

When the UE receives the physical layer signal/channel with the adaptation indication on p/sp physical layer resources for SR, the UE applies the adaptation indication at a reference point. The UE can determine the reference point based on at least one of the following approaches:
- In one approach, the reference point is start of next periodicity of the applicable p/sp physical layer resource for SR.
- In one approach, the reference point is first slot/symbol that is at least a number of N>=1 slots/symbols/milliseconds after the last slot/symbol of the physical layer signal/channel with the adaptation indication. The number of N>=1 slots/symbols/milliseconds can be provided to the UE by higher layer signaling or according to UE capability.
- In one approach, the reference point is start of next C-DRX cycle, wherein the next C-DRX cycle is the first C-DRX cycle that is after the last symbol of the physical layer signal/channel where the UE receives the adaptation indication. The start of next C-DRX cycle can be the start of the first slot/SFN of the next C-DRX cycle.
- In one approach, the reference point is start of next C-DRX cycle, wherein the next C-DRX cycle is the first C-DRX cycle after the current C-DRX cycle where the UE receives the adaptation indication. When the physical layer signal/channel where the UE receives the adaptation indication occupies time domain resources across two C-DRX cycles, the current C-DRX cycle can be the earlier C-DRX cycle of the two C-DRX cycles or the latter C-DRX cycle of the two C-DRX cycles. The start of next C-DRX cycle can be the start of the first slot/SFN of the next C-DRX cycle.

After the UE applies an adaptation indication adaptation indication on p/sp physical layer resources for SR, the UE can assume the validity period or effective period of the adaptation indication based on one of the following approaches:
- In one approach, the UE assumes the adaptation indication is valid till the UE receives another adaptation indication.
- In one approach, the UE assumes the adaptation indication is valid for a time duration. The unit of the time duration can be a slot or a millisecond or a monitoring periodicity of applicable p/sp physical layer resource for SR. In one example, the time duration can be provided to the UE by higher layers, e.g., via dedicated RRC signaling or in SIB. In another example, the time duration can be predetermined in the specification of the system operation. In yet another example, the time duration can be provided in the physical layer signal/channel carries the adaptation indication.
- In one approach, the UE assumes the adaptation indication is valid within active time for next one or more C-DRX cycles.

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

Although the figures illustrate different examples of user equipment, various changes may be made to the figures. For example, the user equipment can include any number of each component in any suitable arrangement. In general, the figures do not limit the scope of this disclosure to any particular configuration(s). Moreover, while figures illustrate operational environments in which various user equipment features disclosed in this patent document can be used, these features can be used in any other suitable system.

FIGURE 9 illustrates a block diagram of a terminal (or a user equipment (UE)), according to embodiments of the present disclosure. FIGURE 9 corresponds to the example of the UE of FIGURE 3.

As shown in FIGURE 9, the UE according to an embodiment may include a transceiver 910, a memory 920, and a processor 930. The transceiver 910, the memory 920, and the processor 930 of the UE may operate according to a communication method of the UE described above. However, the components of the UE are not limited thereto. For example, the UE may include more or fewer components than those described above. In addition, the processor 930, the transceiver 910, and the memory 920 may be implemented as a single chip. Also, the processor 930 may include at least one processor.

The transceiver 910 collectively refers to a UE receiver and a UE transmitter, and may transmit/receive a signal to/from a base station or a network entity. The signal transmitted or received to or from the base station or a network entity may include control information and data. The transceiver 910 may include a RF transmitter for up-converting and amplifying a frequency of a transmitted signal, and a RF receiver for amplifying low-noise and down-converting a frequency of a received signal. However, this is only an example of the transceiver 910 and components of the transceiver 910 are not limited to the RF transmitter and the RF receiver.

Also, the transceiver 910 may receive and output, to the processor 930, a signal through a wireless channel, and transmit a signal output from the processor 930 through the wireless channel.

The memory 920 may store a program and data required for operations of the UE. Also, the memory 920 may store control information or data included in a signal obtained by the UE. The memory 920 may be a storage medium, such as read-only memory (ROM), random access memory (RAM), a hard disk, a CD-ROM, and a DVD, or a combination of storage media.

The processor 930 may control a series of processes such that the UE operates as described above. For example, the transceiver 910 may receive a data signal including a control signal transmitted by the base station or the network entity, and the processor 930 may determine a result of receiving the control signal and the data signal transmitted by the base station or the network entity.

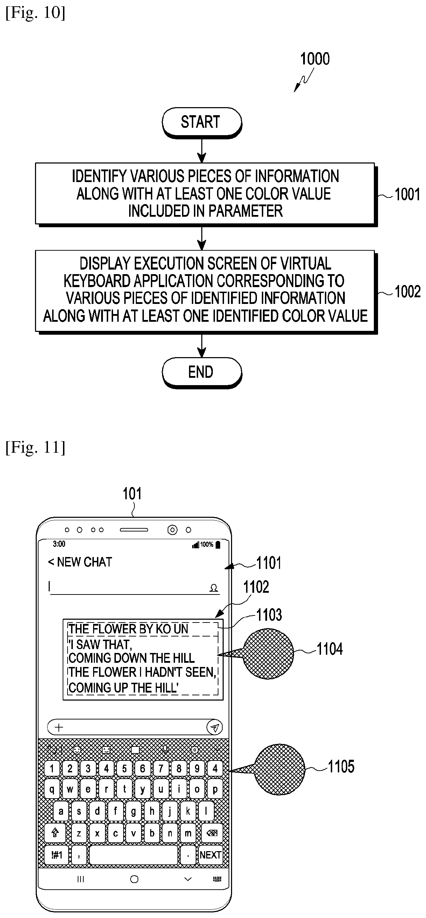

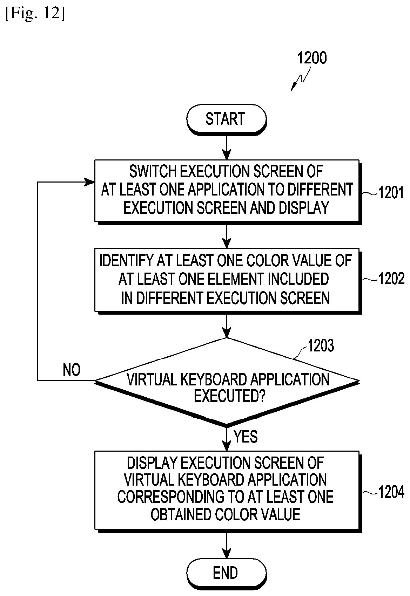

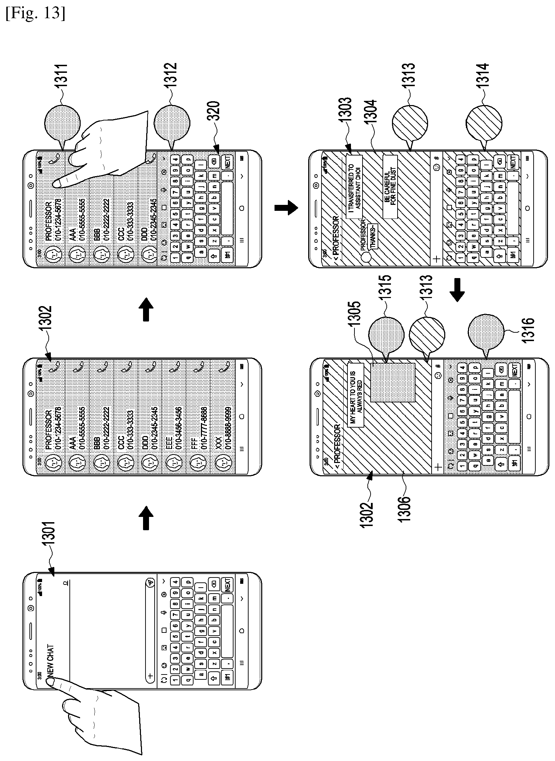

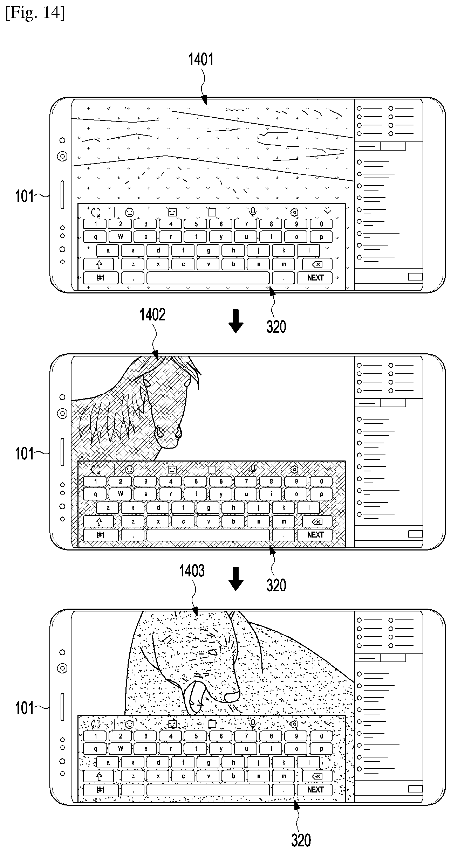

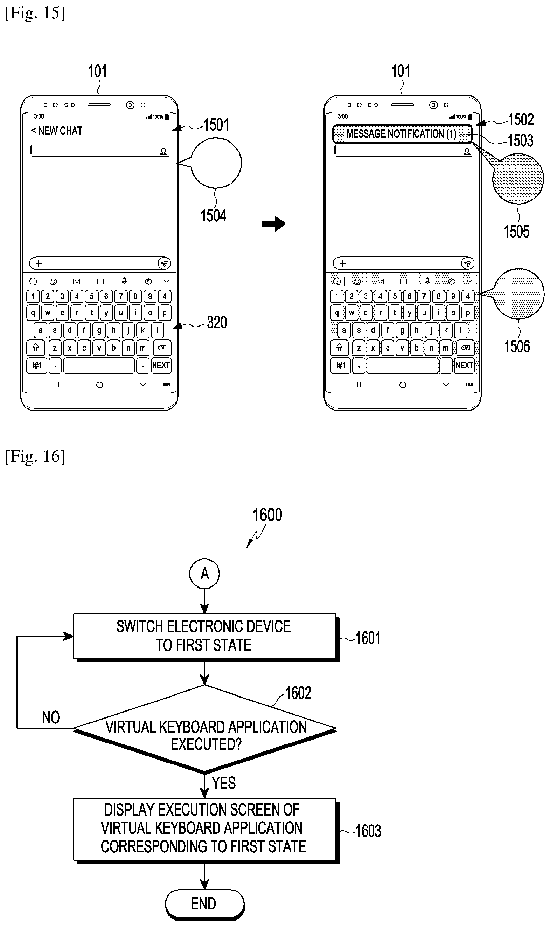

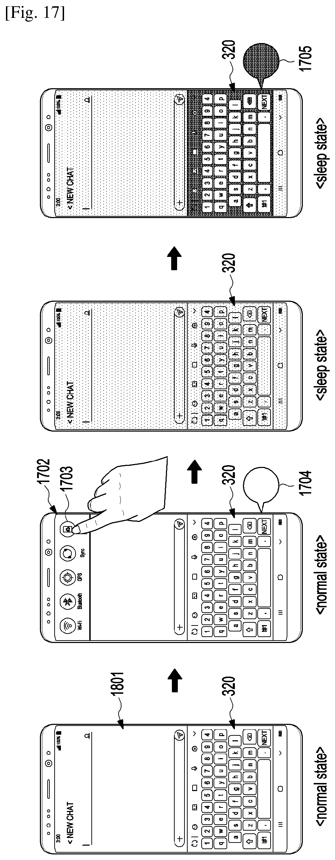

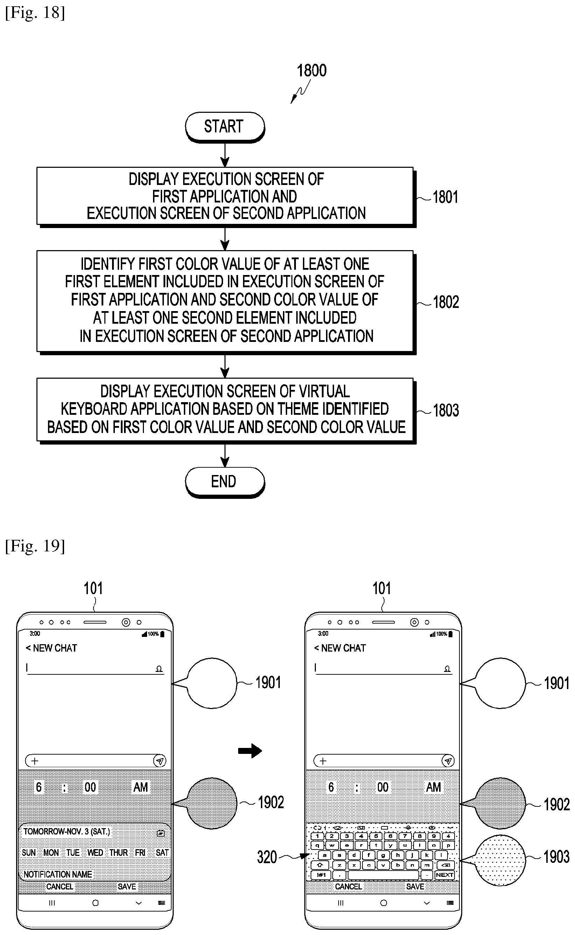

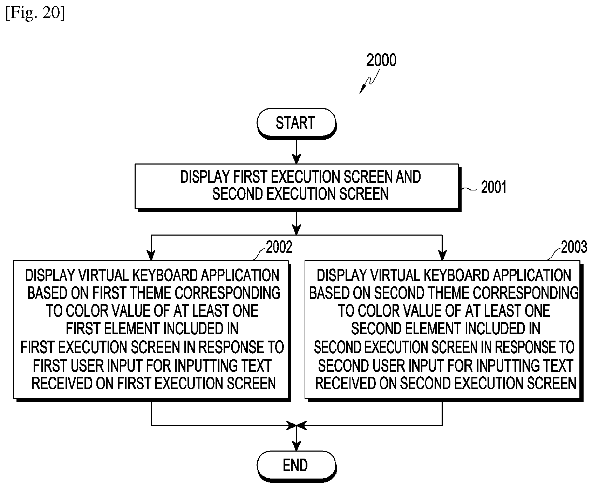

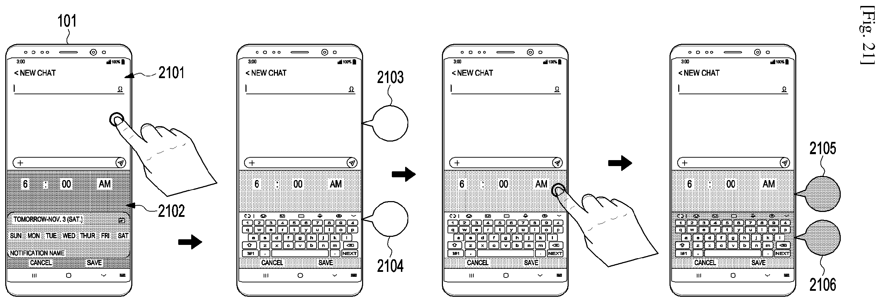

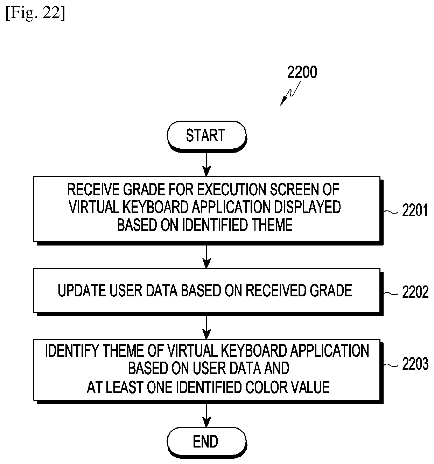

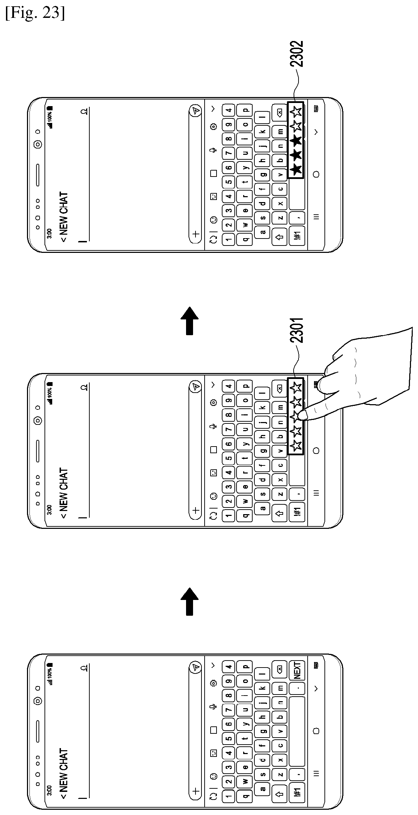

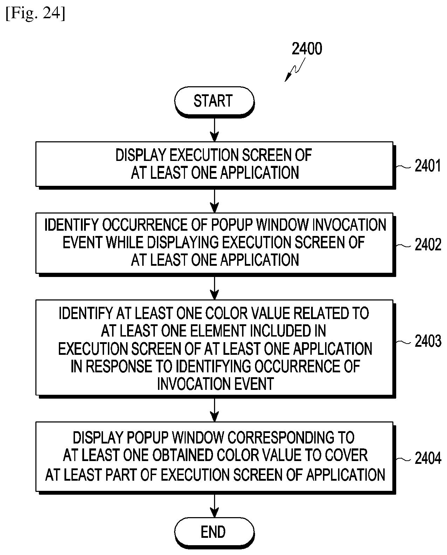

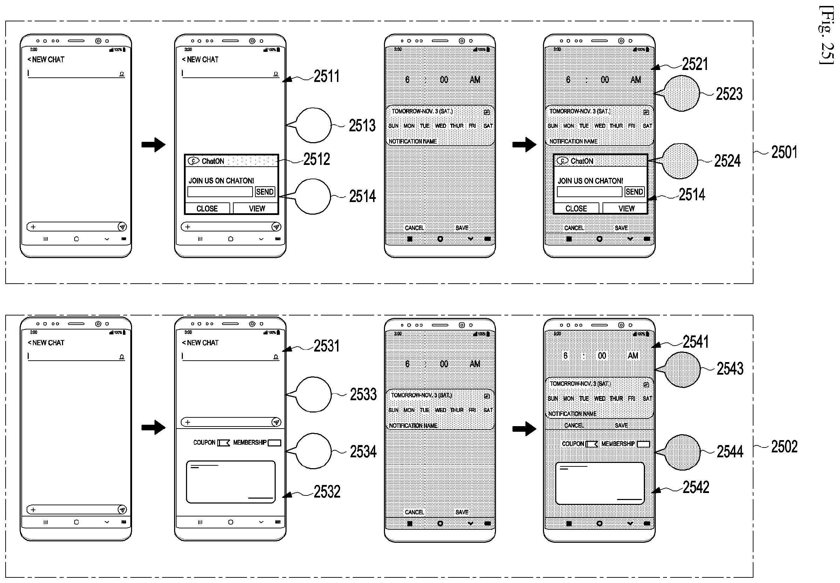

FIGURE 10 illustrates a block diagram of a base station, according to embodiments of the present disclosure. FIGURE 10 corresponds to the example of the gNB of FIGURE 2.

As shown in FIG. 10, the base station according to an embodiment may include a transceiver 1010, a memory 1020, and a processor 1030. The transceiver 1010, the memory 1020, and the processor 1030 of the base station may operate according to a communication method of the base station described above. However, the components of the base station are not limited thereto. For example, the base station may include more or fewer components than those described above. In addition, the processor 1030, the transceiver 1010, and the memory 1020 may be implemented as a single chip. Also, the processor 1030 may include at least one processor.

The transceiver 1010 collectively refers to a base station receiver and a base station transmitter, and may transmit/receive a signal to/from a terminal or a network entity. The signal transmitted or received to or from the terminal or a network entity may include control information and data. The transceiver 1010 may include a RF transmitter for up-converting and amplifying a frequency of a transmitted signal, and a RF receiver for amplifying low-noise and down-converting a frequency of a received signal. However, this is only an example of the transceiver 1010 and components of the transceiver 1010 are not limited to the RF transmitter and the RF receiver.

Also, the transceiver 1010 may receive and output, to the processor 1030, a signal through a wireless channel, and transmit a signal output from the processor 1030 through the wireless channel.

The memory 1020 may store a program and data required for operations of the base station. Also, the memory 1020 may store control information or data included in a signal obtained by the base station. The memory 1020 may be a storage medium, such as read-only memory (ROM), random access memory (RAM), a hard disk, a CD-ROM, and a DVD, or a combination of storage media.

The processor 1030 may control a series of processes such that the base station operates as described above. For example, the transceiver 1010 may receive a data signal including a control signal transmitted by the terminal, and the processor 1030 may determine a result of receiving the control signal and the data signal transmitted by the terminal.

In the afore-described embodiments of the present disclosure, elements included in the present disclosure are expressed in a singular or plural form according to the embodiments. However, the singular or plural form is appropriately selected for convenience of explanation and the present disclosure is not limited thereto. As such, an element expressed in a plural form may also be configured as a single element, and an element expressed in a singular form may also be configured as plural elements.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

## Claims

1. An electronic device (101), comprising:
a display;
at least one processor (120); and
memory (130) storing instructions that, when executed by the at least one processor (120), cause the electronic device to:
control (201) the display to display execution screens of an application ,
identify (202) an occurrence of an event for displaying an execution screen of a virtual keyboard application while displaying one of the execution screens of the application, in response to receiving a user input for selecting a text input window displayed on the one of the execution screens of the application,
based on the occurrence of the event, identify (203) at least one color value related to at least one element included in the displayed execution screen of the application,
identify a luminance value based on a mean value of the identified at least one color value, and
control the display to display (204) the execution screen of the virtual keyboard application based on an identified theme corresponding to the identified luminance value, wherein the luminance value of the execution screen of the virtual keyboard application changes in response to switching the displayed execution screen of the application to a different execution screen.

2. The electronic device (101) of claim 1, wherein the instructions cause the electronic device to:
based on the virtual keyboard application being executed, identify at least one parameter including information related to the application and the identified at least one color value, and
identify the theme of the virtual keyboard application based on at least part of the identified at least one parameter.

3. The electronic device (101) of claim 2, wherein the memory (130) is configured to store first information for a first theme corresponding to a first color value and second information for a second theme corresponding to a second color value, and
wherein the instructions cause the electronic device to:
identify a specific color value based on at least part of the at least one color value included in the at least one parameter,
identify whether the identified specific color value corresponds to the first theme or the second theme based on the first information and the second information which are stored in the memory (130),
based on the identified specific color value corresponding to the first color value, identify the first theme corresponding to the first color value as the theme of the virtual keyboard application, and
based on the identified specific color value corresponding to the second color value, identify the second theme corresponding to the second color value as the theme of the virtual keyboard application.

4. The electronic device (101) of claim 1, wherein the instructions cause the electronic device to:
identify the information related to the application and the at least one color value included in the at least one parameter, and
control the display to display the execution screen of the virtual keyboard application corresponding to the information related to the application and the at least one color value.

5. The electronic device (101) of claim 1, wherein the instructions cause the electronic device to:
identify a variable theme setting state of the virtual keyboard application, which is associated with displaying the virtual keyboard application corresponding to the identified at least one color value, and
control the display to display the execution screen of the virtual keyboard application based on at least part of the identified variable theme setting state.

6. The electronic device (101) of claim 1, wherein the instructions cause the electronic device to:
identify a state of the electronic device, and
control the display to display the execution screen of the virtual keyboard application based on at least part of the identified state of the electronic device.

7. The electronic device (101) of claim 1, wherein the instructions cause the electronic device to:
control the display to display a first execution screen of the application including at least one first element different from the at least one element included in the execution screen,
obtain a first color value of the at least one first element included in the first execution screen, and
control the display to display the execution screen of the virtual keyboard application based on a first theme identified based on at least part of the obtained first color value.

8. The electronic device (101) of claim 7, wherein the instructions cause the electronic device to:
when a state of the electronic device switches to a first state, control the display to display the execution screen of the virtual keyboard application based on a second theme corresponding to the first state instead of the first theme.

9. The electronic device (101) of claim 1,
wherein the instructions cause the electronic device to:
control the display to display an execution screen of a first application and an execution screen of a second application at the same time,
identify at least one first color value of at least one first element included in the execution screen of the first application and at least one second color value of at least one second element included in the execution screen of the second application, and
control the display to display the execution screen of the virtual keyboard application based on the theme of the virtual keyboard application identified based on at least part of the at least one first color value and the at least one second color value.

10. The electronic device (101) of claim 1, wherein the memory (130) is configured to store a first application and a second application, and
wherein the instructions cause the electronic device (101) to:
control the display to display an execution screen of the first application and an execution screen of the second application,
based on a first user input received on the execution screen of the first application, control the display to display another virtual keyboard application corresponding to at least one first color value of at least one first element included in the execution screen of the first application, and
based on a second user input received on the execution screen of the second application, control the display to display the virtual keyboard application corresponding to at least one second color value of at least one second element included in the execution screen of the second application.

11. A method of controlling an electronic device (101), the method comprising:
displaying (201) execution screens of an application on a display of the electronic device;
identifying (202) an occurrence of an event for displaying an execution screen of a virtual keyboard application while displaying one of the execution screens of the application, in response to receiving a user input for selecting a text input window displayed on the one of the execution screens of the application;
based on the occurrence of the event, identifying at least one color value related to at least one element included in the displayed execution screen of the application being displayed on the display;
identifying (203) a luminance value based on a mean value of the identified at least one color value; and
displaying (204) the execution screen of the virtual keyboard application based on an identified theme corresponding to the identified at least one color value, wherein the luminance value of the execution screen of the virtual keyboard application changes in response to switching the displayed execution screen of the application to a different execution screen.

12. The method of claim 11, further comprising:
based on the virtual keyboard application being executed, identifying at least one parameter including information related to the application and the identified at least one color value; and
identifying the theme of the virtual keyboard application based on at least part of the identified at least one parameter.

13. The method of claim 12, wherein displaying the execution screen of the virtual keyboard application comprises:
identifying a specific color value based on at least part of the at least one color value included in the at least one parameter;
identifying whether the identified specific color value corresponds to a first theme or a second theme based on first information and second information which are stored in memory of the electronic device;
based on the identified specific color value corresponding to at least one first color value, identifying the first theme corresponding to the at least one first color value as the theme of the virtual keyboard application; and
based on the identified specific color value corresponding to at least one second color value, identifying the second theme corresponding to the at least one second color value as the theme of the virtual keyboard application.

14. A non-transitory computer-readable storage medium storing instructions which, when executed by at least one processor (120) of an electronic device (101), cause the electronic device to perform the method of any of claims 11 to 13.

## Patentansprüche

1. Elektronische Vorrichtung (101), die Folgendes umfasst:
ein Display;
mindestens einen Prozessor (120); und
einen Speicher (130), der Anweisungen speichert, die, wenn sie von dem mindestens einen Prozessor (120) ausgeführt werden, die elektronische Vorrichtung zu Folgendem veranlassen:
Steuern (201) des Displays zum Anzeigen von Ausführungsbildschirmen einer Anwendung,
Identifizieren (202) eines Auftretens eines Ereignisses zum Anzeigen eines Ausführungsbildschirms einer virtuellen Tastaturanwendung während des Anzeigens eines der Ausführungsbildschirme der Anwendung als Reaktion auf das Empfangen einer Benutzereingabe zum Auswählen eines Texteingabefensters, das auf dem einen der Ausführungsbildschirme der Anwendung angezeigt wird,
basierend auf dem Auftreten des Ereignisses, Identifizieren (203) mindestens eines Farbwerts in Bezug auf mindestens ein Element, das in dem angezeigten Ausführungsbildschirm der Anwendung enthalten ist,
Identifizieren eines Luminanzwerts basierend auf einem Mittelwert des identifizierten mindestens einen Farbwerts, und
Steuern des Displays so, dass der Ausführungsbildschirm der virtuellen Tastaturanwendung basierend auf einem identifizierten Thema angezeigt wird (204), das dem identifizierten Luminanzwert entspricht, wobei sich der Luminanzwert des Ausführungsbildschirms der virtuellen Tastaturanwendung als Reaktion auf das Umschalten des angezeigten Ausführungsbildschirms der Anwendung auf einen anderen Ausführungsbildschirm ändert.

2. Elektronische Vorrichtung (101) nach Anspruch 1, wobei die Anweisungen die elektronische Vorrichtung zu Folgendem veranlassen:
basierend auf der ausgeführten virtuellen Tastaturanwendung, Identifizieren mindestens eines Parameters, der Informationen in Bezug auf die Anwendung und den identifizierten mindestens einen Farbwert enthält, und
Identifizieren des Themas der virtuellen Tastaturanwendung basierend auf mindestens einem Teil des identifizierten mindestens einen Parameters.

3. Elektronische Vorrichtung (101) nach Anspruch 2, wobei der Speicher (130) so konfiguriert ist, dass er erste Informationen für ein erstes Thema speichert, das einem ersten Farbwert entspricht, und zweite Informationen für ein zweites Thema, das einem zweiten Farbwert entspricht, und
wobei die Anweisungen die elektronische Vorrichtung zu Folgendem veranlassen:
Identifizieren eines spezifischen Farbwerts basierend auf mindestens einem Teil des mindestens einen Farbwerts, der in dem mindestens einen Parameter enthalten ist,
Identifizieren, ob der identifizierte spezifische Farbwert dem ersten Thema oder dem zweiten Thema entspricht, basierend auf den ersten Informationen und den zweiten Informationen, die in dem Speicher (130) gespeichert sind,
basierend auf dem identifizierten spezifischen Farbwert, der dem ersten Farbwert entspricht, Identifizieren des ersten Themas, das dem ersten Farbwert entspricht, als Thema der virtuellen Tastaturanwendung, und
basierend auf dem identifizierten spezifischen Farbwert, der dem zweiten Farbwert entspricht, Identifizieren des zweiten Themas, das dem zweiten Farbwert entspricht, als Thema der virtuellen Tastaturanwendung.

4. Elektronische Vorrichtung (101) nach Anspruch 1, wobei die Anweisungen die elektronische Vorrichtung zu Folgendem veranlassen:
Identifizieren der Informationen in Bezug auf die Anwendung und des mindestens einen Farbwerts, der in dem mindestens einen Parameter enthalten ist, und
Steuern des Displays so, dass es den Ausführungsbildschirm der virtuellen Tastaturanwendung anzeigt, der den Informationen in Bezug auf die Anwendung und dem mindestens einen Farbwert entspricht.

5. Eektronische Vorrichtung (101) nach Anspruch 1, wobei die Anweisungen die elektronische Vorrichtung zu Folgendem veranlassen:
Identifizieren eines variablen Themeneinstellungszustands der virtuellen Tastaturanwendung, der mit dem Anzeigen der virtuellen Tastaturanwendung assoziiert ist, die dem identifizierten mindestens einen Farbwert entspricht, und
Steuern des Displays so, dass es den Ausführungsbildschirm der virtuellen Tastaturanwendung anzeigt, basierend auf mindestens einem Teil des identifizierten variablen Themeneinstellungszustands.

6. Elektronische Vorrichtung (101) nach Anspruch 1, wobei die Anweisungen die elektronische Vorrichtung zu Folgendem veranlassen:
Identifizieren eines Zustands der elektronischen Vorrichtung, und
Steuern des Displays so, dass es den Ausführungsbildschirm der virtuellen Tastaturanwendung anzeigt, basierend auf mindestens einem Teil des identifizierten Zustands der elektronischen Vorrichtung.

7. Elektronische Vorrichtung (101) nach Anspruch 1, wobei die Anweisungen die elektronische Vorrichtung zu Folgendem veranlassen:
Steuern des Displays so, dass es einen ersten Ausführungsbildschirm der Anwendung anzeigt, der mindestens ein erstes Element enthält, das sich von dem mindestens einen in dem Ausführungsbildschirm enthaltenen Element unterscheidet,
Erhalten eines ersten Farbwerts des mindestens einen in dem ersten Ausführungsbildschirm enthaltenen ersten Elements, und
Steuern des Displays so, dass es den Ausführungsbildschirm der virtuellen Tastaturanwendung anzeigt, basierend auf einem ersten Thema, das basierend auf mindestens einem Teil des erhaltenen ersten Farbwerts identifiziert wurde.

8. Elektronische Vorrichtung (101) nach Anspruch 7, wobei die Anweisungen die elektronische Vorrichtung zu Folgendem veranlassen:
wenn ein Zustand der elektronischen Vorrichtung in einen ersten Zustand wechselt, Steuern des Displays so, dass es den Ausführungsbildschirm der virtuellen Tastaturanwendung anzeigt, basierend auf einem zweiten Thema, das dem ersten Zustand entspricht, anstatt dem ersten Thema.

9. Elektronische Vorrichtung (101) nach Anspruch 1,
wobei die Anweisungen die elektronische Vorrichtung zu Folgendem veranlassen:
Steuern des Displays so, dass es einen Ausführungsbildschirm einer ersten Anwendung und einen Ausführungsbildschirm einer zweiten Anwendung gleichzeitig anzeigt,
Identifizieren mindestens eines ersten Farbwerts von mindestens einem ersten Element, das in dem Ausführungsbildschirm der ersten Anwendung enthalten ist, und mindestens eines zweiten Farbwerts von mindestens einem zweiten Element, das in dem Ausführungsbildschirm der zweiten Anwendung enthalten ist, und
Steuern des Displays so, dass es den Ausführungsbildschirm der virtuellen Tastaturanwendung anzeigt, basierend auf dem Thema der virtuellen Tastaturanwendung, das basierend auf mindestens einem Teil des mindestens einen ersten Farbwerts und des mindestens einen zweiten Farbwerts identifiziert wurde.

10. Eektronische Vorrichtung (101) nach Anspruch 1, wobei der Speicher (130) so konfiguriert ist, dass er eine erste Anwendung und eine zweite Anwendung speichert, und
wobei die Anweisungen die elektronische Vorrichtung (101) zu Folgendem veranlassen:
Steuern des Displays so, dass es einen Ausführungsbildschirm der ersten Anwendung und einen Ausführungsbildschirm der zweiten Anwendung anzeigt,
basierend auf einer ersten Benutzereingabe, die auf dem Ausführungsbildschirm der ersten Anwendung empfangen wurde, Steuern des Displays so, dass es eine weitere virtuelle Tastaturanwendung anzeigt, die mindestens einem ersten Farbwert eines in dem Ausführungsbildschirm der ersten Anwendung enthaltenen ersten Elements entspricht, und
basierend auf einer zweiten Benutzereingabe, die auf dem Ausführungsbildschirm der zweiten Anwendung empfangen wurde, Steuern des Displays so, dass es die virtuelle Tastaturanwendung anzeigt, die mindestens einem zweiten Farbwert mindestens eines in dem Ausführungsbildschirm der zweiten Anwendung enthaltenen zweiten Elements entspricht.

11. Verfahren zur Steuerung einer elektronischen Vorrichtung (101), wobei das Verfahren Folgendes umfasst:
Anzeigen (201) von Ausführungsbildschirmen einer Anwendung auf einem Display der elektronischen Vorrichtung;
Identifizieren (202) eines Auftretens eines Ereignisses zum Anzeigen eines Ausführungsbildschirms einer virtuellen Tastaturanwendung während des Anzeigens eines der Ausführungsbildschirme der Anwendung als Reaktion auf das Empfangen einer Benutzereingabe zum Auswählen eines Texteingabefensters, das auf dem einen der Ausführungsbildschirme der Anwendung angezeigt wird;
basierend auf dem Auftreten des Ereignisses, Identifizieren mindestens eines Farbwerts in Bezug auf mindestens ein Element, das in dem angezeigten Ausführungsbildschirm der auf dem Display angezeigten Anwendung enthalten ist;
Identifizieren (203) eines Luminanzwerts basierend auf einem Mittelwert des identifizierten mindestens einen Farbwerts; und
Anzeigen (204) des Ausführungsbildschirms der virtuellen Tastaturanwendung basierend auf einem identifizierten Thema, das dem identifizierten mindestens einen Farbwert entspricht, wobei sich der Luminanzwert des Ausführungsbildschirms der virtuellen Tastaturanwendung als Reaktion auf das Umschalten des angezeigten Ausführungsbildschirms der Anwendung auf einen anderen Ausführungsbildschirm ändert.

12. Verfahren nach Anspruch 11, das ferner Folgendes umfasst:
basierend auf der ausgeführten virtuellen Tastaturanwendung, Identifizieren mindestens eines Parameters, der Informationen in Bezug auf die Anwendung und den identifizierten mindestens einen Farbwert enthält; und
Identifizieren des Themas der virtuellen Tastaturanwendung basierend auf mindestens einem Teil des identifizierten mindestens einen Parameters.

13. Verfahren nach Anspruch 12, wobei das Anzeigen des Ausführungsbildschirms der virtuellen Tastaturanwendung Folgendes umfasst:
Identifizieren eines spezifischen Farbwerts basierend auf mindestens einem Teil des mindestens einen Farbwerts, der in dem mindestens einen Parameter enthalten ist;
Identifizieren, ob der identifizierte spezifische Farbwert einem ersten Thema oder einem zweiten Thema entspricht, basierend auf den ersten Informationen und den zweiten Informationen, die in dem Speicher der elektronischen Vorrichtung gespeichert sind;
basierend auf dem identifizierten spezifischen Farbwert, der mindestens einem ersten Farbwert entspricht, Identifizieren des ersten Themas, das dem mindestens einen ersten Farbwert entspricht, als Thema der virtuellen Tastaturanwendung; und
basierend auf dem identifizierten spezifischen Farbwert, der mindestens einem zweiten Farbwert entspricht, Identifizieren des zweiten Themas, das dem mindestens einen zweiten Farbwert entspricht, als Thema der virtuellen Tastaturanwendung.

14. Nicht flüchtiges, computerlesbares Speichermedium, das Anweisungen speichert, die, wenn sie von mindestens einem Prozessor (120) einer elektronischen Vorrichtung (101) ausgeführt werden, die elektronische Vorrichtung veranlassen, das Verfahren nach einem der Ansprüche 11 bis 13 auszuführen.

## Revendications

1. Dispositif électronique (101), comprenant :
une unité d'affichage ;
au moins un processeur (120) ; et
une mémoire (130) stockant des instructions (130) qui, lorsqu'elles sont exécutées par l'au moins un processeur (120), amènent le dispositif électronique à :
commander (201) l'unité d'affichage pour afficher des écrans d'exécution d'une application,
identifier (202) une occurrence d'un événement pour afficher un écran d'exécution d'une application de clavier virtuel tout en affichant l'un des écrans d'exécution de l'application, en réponse à la réception d'une entrée d'utilisateur pour sélectionner une fenêtre d'entrée de texte affichée sur l'un des écrans d'exécution de l'application,
en fonction de l'occurrence de l'événement, identifier (203) au moins une valeur de couleur liée à au moins un élément inclus dans l'écran d'exécution affiché de l'application,
identifier une valeur de luminance en fonction d'une valeur moyenne de l'au moins une valeur de couleur identifiée, et
commander l'unité d'affichage pour afficher (204) l'écran d'exécution de l'application de clavier virtuel en fonction d'un thème identifié correspondant à la valeur de luminance identifiée, où la valeur de luminance de l'écran d'exécution de l'application de clavier virtuel change en réponse à la commutation de l'écran d'exécution affiché de l'application à un écran d'exécution différent.

2. Dispositif électronique (101) selon la revendication 1, où les instructions amènent le dispositif électronique à :
en fonction de l'application de clavier virtuel en cours d'exécution, identifier au moins un paramètre incluant des informations relatives à l'application et à l'au moins une valeur de couleur identifiée, et
identifier le thème de l'application de clavier virtuel en fonction d'au moins une partie de l'au moins un paramètre identifié.

3. Dispositif électronique (101) selon la revendication 2, où la mémoire (130) est configurée pour stocker des premières informations sur un premier thème correspondant à une première valeur de couleur et des deuxièmes informations pour un deuxième thème correspondant à une deuxième valeur de couleur, et
où les instructions amènent le dispositif électronique à :
identifier une valeur de couleur spécifique en fonction d'au moins une partie de l'au moins une valeur de couleur incluse dans l'au moins un paramètre,
identifier si la valeur de couleur spécifique identifiée correspond au premier thème ou au deuxième thème en fonction des premières informations et des deuxièmes informations qui sont stockées dans la mémoire (130),
en fonction de la valeur de couleur spécifique identifiée correspondant à la première valeur de couleur, identifier le premier thème correspondant à la première valeur de couleur comme le thème de l'application de clavier virtuel, et
en fonction de la valeur de couleur spécifique identifiée correspondant à la deuxième valeur de couleur, identifier le deuxième thème correspondant à la deuxième valeur de couleur comme le thème de l'application de clavier virtuel.

4. Dispositif électronique (101) selon la revendication 1, où les instructions amènent le dispositif électronique à :
identifier les informations relatives à l'application et à l'au moins une valeur de couleur incluse dans l'au moins un paramètre, et
commander l'unité d'affichage pour afficher l'écran d'exécution de l'application de clavier virtuel correspondant aux informations relatives à l'application et à l'au moins une valeur de couleur.

5. Dispositif électronique (101) selon la revendication 1, où les instructions amènent le dispositif électronique à :
identifier un état de paramétrage de thème variable de l'application de clavier virtuel, qui est associé à l'affichage de l'application de clavier virtuel correspondant à l'au moins une valeur de couleur identifiée, et
commander l'unité d'affichage pour afficher l'écran d'exécution de l'application de clavier virtuel en fonction d'au moins une partie de l'état de paramétrage de thème variable identifié.

6. Dispositif électronique (101) selon la revendication 1, où les instructions amènent le dispositif électronique à :
identifier un état du dispositif électronique, et
commander l'unité d'affichage pour afficher l'écran d'exécution de l'application de clavier virtuel en fonction d'au moins une partie de l'état identifié du dispositif électronique.

7. Dispositif électronique (101) selon la revendication 1, où les instructions amènent le dispositif électronique à :
commander l'unité d'affichage pour afficher un premier écran d'exécution de l'application incluant au moins un premier élément différent de l'au moins un élément inclus dans l'écran d'exécution,
obtenir une première valeur de couleur de l'au moins un premier élément inclus dans le premier écran d'exécution, et
commander l'unité d'affichage pour afficher l'écran d'exécution de l'application de clavier virtuel en fonction d'un premier thème identifié en fonction d'au moins une partie de la première valeur de couleur obtenue.

8. Dispositif électronique (101) selon la revendication 7, où les instructions amènent le dispositif électronique à :
lorsqu'un état du dispositif électronique commute à un premier état, commander l'unité d'affichage pour afficher l'écran d'exécution de l'application de clavier virtuel en fonction d'un deuxième thème correspondant au premier état au lieu du premier thème.

9. Dispositif électronique (101) selon la revendication 1,
où les instructions amènent le dispositif électronique à :
commander l'unité d'affichage pour afficher un écran d'exécution d'une première application et un écran d'exécution d'une deuxième application simultanément,
identifier au moins une première valeur de couleur d'au moins un premier élément inclus dans l'écran d'exécution de la première application et au moins une deuxième valeur de couleur d'au moins un deuxième élément inclus dans l'écran d'exécution de la deuxième application, et
commander l'unité d'affichage pour afficher l'écran d'exécution de l'application de clavier virtuel en fonction du thème de l'application de clavier virtuel identifié en fonction d'au moins une partie de l'au moins une première valeur de couleur et de l'au moins une deuxième valeur de couleur.

10. Dispositif électronique (101) selon la revendication 1, où la mémoire (130) est configurée pour stocker une première application et une deuxième application, et
où les instructions amènent le dispositif électronique (101) à :
commander l'unité d'affichage pour afficher un écran d'exécution de la première application et un écran d'exécution de la deuxième application,
en fonction d'une première entrée d'utilisateur reçue sur l'écran d'exécution de la première application, commander l'unité d'affichage pour afficher une autre application de clavier virtuel correspondant à au moins une première valeur de couleur d'au moins un premier élément inclus dans l'écran d'exécution de la première application, et
en fonction d'une deuxième entrée d'utilisateur reçue sur l'écran d'exécution de la deuxième application, commander l'unité d'affichage pour afficher l'application de clavier virtuel correspondant à au moins une deuxième valeur de couleur d'au moins un deuxième élément inclus dans l'écran d'exécution de la deuxième application.

11. Procédé de commande d'un dispositif électronique (101), le procédé comprenant :
afficher (201) des écrans d'exécution d'une application sur une unité d'affichage du dispositif électronique ;
identifier (202) une occurrence d'un événement pour afficher un écran d'exécution d'une application de clavier virtuel tout en affichant l'un des écrans d'exécution de l'application, en réponse à la réception d'une entrée d'utilisateur pour sélectionner une fenêtre d'entrée de texte affichée sur l'un des écrans d'exécution de l'application ;
en fonction de l'occurrence de l'événement, identifier au moins une valeur de couleur liée à au moins un élément inclus dans l'écran d'exécution affiché de l'application en cours d'affichage sur l'unité d'affichage ;
identifier (203) une valeur de luminance en fonction d'une valeur moyenne de l'au moins une valeur de couleur identifiée ; et
afficher (204) l'écran d'exécution de l'application de clavier virtuel en fonction d'un thème identifié correspondant à l'au moins une valeur de couleur identifiée, où la valeur de luminance de l'écran d'exécution change en réponse à la commutation de l'écran d'exécution affiché de l'application à un écran d'exécution différent.

12. Procédé selon la revendication 11, comprenant en outre :
en fonction de l'application de clavier virtuel en cours d'exécution, identifier au moins un paramètre incluant des informations relatives à l'application et à l'au moins une valeur de couleur identifiée ; et
identifier le thème de l'application de clavier virtuel en fonction d'au moins une partie de l'au moins un paramètre identifié.

13. Procédé selon la revendication 12, où afficher l'écran d'exécution de l'application de clavier virtuel comprend :
identifier une valeur de couleur spécifique en fonction d'au moins une partie de l'au moins une valeur de couleur incluse dans l'au moins un paramètre ;
identifier si la valeur de couleur spécifique identifiée correspond à un premier thème ou à un deuxième thème en fonction de premières informations et de deuxièmes informations qui sont stockées dans la mémoire du dispositif électronique ;
en fonction de la valeur de couleur spécifique identifiée correspondant à au moins une première valeur de couleur, identifier le premier thème correspondant à l'au moins une première valeur de couleur comme le thème de l'application de clavier virtuel ; et
en fonction de la valeur de couleur spécifique identifiée correspondant à au moins une deuxième valeur de couleur, identifier le deuxième thème correspondant à l'au moins une deuxième valeur de couleur comme le thème de l'application de clavier virtuel.

14. Support de stockage non transitoire lisible par ordinateur stockant des instructions qui, lorsqu'elles sont exécutées par au moins un processeur (120) d'un dispositif électronique (101), amènent le dispositif électronique à mettre en œuvre le procédé selon l'une quelconque des revendications 11 à 13.
